# FASCICULE DE BREVET EUROPEEN

(11) **EP 3 158 749 B1**
(45) Date de publication et mention de la délivrance du brevet: **06.03.2024**
(21) Numéro de dépôt: 15733835.1
(22) Date de dépôt: 15.06.2015
(51) Int. Cl.: H04N 19/52, H04N 19/139, H04N 19/46, H04N 19/51, H04N 19/107, H04N 19/162, H04N 19/82, H04N 19/523

(54) **PROCÉDÉ DE CODAGE ET DE DÉCODAGE D'IMAGES, DISPOSITIF DE CODAGE ET DE DÉCODAGE D'IMAGES ET PROGRAMMES D'ORDINATEUR CORRESPONDANTS**
VERFAHREN ZUR CODIERUNG UND DECODIERUNG VON BILDERN, VORRICHTUNG ZUR CODIERUNG UND DECODIERUNG VON BILDERN UND ENTSPRECHENDE COMPUTERPROGRAMME
METHOD FOR ENCODING AND DECODING IMAGES, DEVICE FOR ENCODING AND DECODING IMAGES, AND CORRESPONDING COMPUTER PROGRAMMES

(30) Priorité: 19.06.2014 FR 1455666
(43) Date de publication de la demande: 26.04.2017
(73) Titulaire: Orange, 92130 Issy-les-Moulineaux (FR)
(72) Inventeur: JUNG, Joël, 78320 Le Mesnil Saint Denis (FR); VO NGUYEN, Dang Khoa, 92130 Issy Les Moulineaux (FR)
(86) Numéro de dépôt international: PCT/FR2015/051577
(87) Numéro de publication internationale: WO 2015/193599

(56) Documents cités:
- EP-A1- 1 921 867
- US-A1- 2003 058 347
- US-A1- 2010 020 244
- US-A1- 2010 079 605
- US-A1- 2011 206 124
- US-A1- 2012 169 890
- PURI A ET AL: "Video coding using the H.264/MPEG-4 AVC compression standard", SIGNAL PROCESSING. IMAGE COMMUNICATION, ELSEVIER SCIENCE PUBLISHERS, AMSTERDAM, NL, vol. 19, no. 9, 1 octobre 2004 (2004-10-01), pages 793-849, XP004607150, ISSN: 0923-5965, DOI: 10.1016/J.IMAGE.2004.06.003

## Description

### Domaine de l'invention

La présente invention se rapporte de manière générale au domaine du traitement d'images, et plus précisément au codage et au décodage d'images numériques et de séquences d'images numériques.

Le codage/décodage d'images numériques s'applique notamment à des images issues d'au moins une séquence vidéo comprenant :
- des images issues d'une même caméra et se succédant temporellement (codage/décodage de type 2D),
- des images issues de différentes caméras orientées selon des vues différentes (codage/décodage de type 3D),
- des composantes de texture et de profondeur correspondantes (codage/décodage de type 3D),
- etc...

La présente invention s'applique de manière similaire au codage/décodage d'images de type 2D ou 3D.

L'invention peut notamment, mais non exclusivement, s'appliquer au codage vidéo mis en oeuvre dans les codeurs vidéo actuels tels que par exemple AVC, HEVC et leurs extensions (MVC, 3D-AVC, MV-HEVC, 3D-HEVC, etc), et au décodage correspondant.

### Art antérieur

Les images et séquences d'images numériques occupent beaucoup d'espace en termes de mémoire, ce qui nécessite, lorsqu'on transmet ces images, de les compresser afin d'éviter les problèmes d'encombrement sur le réseau de communication utilisé pour cette transmission, le débit utilisable sur celui-ci étant généralement limité. Cette compression est également souhaitable en vue du stockage de ces données.

On connaît déjà de nombreuses techniques de compression de données vidéo. Par exemple, dans les codeurs vidéo actuels de type HEVC, il est proposé, pour une séquence vidéo considérée, de :
- découper en unités de codage (« coding units ») chaque image de la séquence vidéo, lesdites unités de codage étant susceptibles d'être redécoupées en blocs de façon récursive,
- coder chaque unité de codage conformément à un mode de codage sélectionné, tel qu'en particulier le mode Intra ou Inter.

Ainsi, dans le mode de codage Intra, certaines images de la séquence vidéo sont codées par prédiction spatiale, tandis que dans le mode de codage Inter, d'autres images sont codées par prédiction temporelle par rapport à une ou plusieurs images de référence codées-décodées, à l'aide d'une compensation en mouvement connue par l'homme de l'art.

Après ce codage prédictif, les unités de codage résiduelles sont transformées par une opération de type transformée en cosinus discrète (DCT), puis quantifiées. Les coefficients des unités de codage résiduelles quantifiées sont ensuite parcourus dans un ordre de lecture prédéterminé permettant d'exploiter le nombre important de coefficients nuls dans les hautes fréquences, puis codés par un codage entropique. Dans la norme HEVC par exemple, un mode de codage proposé est d'imposer un seul ordre de lecture possible qui est l'ordre « raster-scan », celui-ci débutant à partir du premier bloc situé en haut et à gauche de l'unité de codage considérée et se terminant au dernier bloc situé en bas et à droite de cette unité.

Lorsqu'une unité de codage est découpée en blocs, un signal de données, correspondant à chaque bloc, est transmis au décodeur. Un tel signal comprend :
- des données résiduelles qui sont les coefficients des blocs résiduels quantifiés et éventuellement, lors d'un codage en mode Inter, des données résiduelles de vecteur mouvement,
- des paramètres de codage qui sont représentatifs du mode de codage utilisé, en particulier:
   ▪ le type de prédiction (prédiction Intra, prédiction Inter, prédiction par défaut réalisant une prédiction pour laquelle aucune information n'est transmise au décodeur (en anglais « skip ») ;
   ▪ des informations précisant le type de prédiction (orientation, image de référence, ...) ;
   ▪ le type de partitionnement ;
   ▪ le type de transformée, par exemple DCT 4x4, DCT 8x8, etc...
   ▪ les informations de mouvement si nécessaire ;
   ▪ etc.

Le décodage est ensuite mis en oeuvre image par image, et pour chaque image, unité de codage par unité de codage. Pour chaque bloc d'une unité de codage, les éléments correspondants du signal sont lus. La quantification inverse et la transformation inverse des coefficients des blocs sont effectuées. Puis, la prédiction d'un bloc considéré est calculée et le bloc est reconstruit en ajoutant la prédiction au résidu de prédiction décodé.

Le codage Intra ou Inter par compétition repose ainsi sur la mise en compétition de différents paramètres de codage, tels que ceux précités, dans le but de sélectionner le meilleur mode de codage, c'est-à-dire celui qui optimisera le codage du bloc considéré selon un critère de performance prédéterminé, par exemple le coût débit/distorsion bien connu de l'homme du métier.

Les paramètres de codage relatifs au mode de codage sélectionné sont contenus dans le signal de données transmis par le codeur au décodeur, sous la forme d'identifiants appelés généralement indices de compétition. Le décodeur est ainsi capable d'identifier le mode de codage sélectionné au codeur, puis d'appliquer la prédiction conforme à ce mode.

La bande passante allouée à ces indices de compétition n'est pas négligeable, puisqu'elle atteint au minimum environ 30%. Elle tend par ailleurs à augmenter en raison de l'apport toujours grandissant de nouveaux paramètres de codage tels que de nouvelles dimensions de blocs, de nouvelles formes de blocs, de nouveaux paramètres de prédiction Intra, etc....

Par ailleurs, les codeurs/décodeurs vidéo du type précité sont installés dans des terminaux de capture d'image tels que par exemple un téléphone portable, un smartphone (« téléphone intelligent »), une tablette, etc...

Ces terminaux sont aujourd'hui pour la plupart munis de différents capteurs de données, tels que par exemple un accéléromètre, un gyroscope, un magnétomètre, lesquels permettent de détecter tout changement de comportement des terminaux, lorsque l'utilisateur les manipule, et, en réponse, d'engendrer une ou plusieurs actions de la part de ces terminaux, sans intervention particulière de l'utilisateur.

Outre les capteurs précités, les terminaux actuels contiennent de nombreuses interfaces (ex : boutons tactiles) qui permettent à l'utilisateur d'actionner des fonctionnalités particulières proposées par ces terminaux, lors de la capture d'une image ou d'une vidéo. Le bouton « zoom avant », « zoom arrière » constitue un exemple de ces interfaces.

Les données fournies par de tels capteurs ou de telles interfaces sont actuellement avantageusement exploitées pour réduire la complexité du codage vidéo.

Par contre, l'exploitation de ces données ne permet pas aujourd'hui d'améliorer les performances de codage/décodage et de réduire le coût de signalisation des données codées dans le signal à transmettre au décodeur.

Les documents suivants sont compris dans l'état de la technique le plus proche: US 2010/079605 A1 (WANG YE [SG] ET AL) 1 avril 2010 (2010-04-01), et, US 2011/206124 A1 (MORPHET STEPHEN [GB] ET AL) 25 août 2011 (2011-08-25).

### Objet et résumé de l'invention

Un des buts de l'invention est de remédier à des inconvénients de l'état de la technique précité.

A cet effet, un objet de la présente invention concerne un procédé de codage d'au moins une image courante comme défini dans la revendication 1.

Une telle disposition permet ainsi, lors d'un codage par compétition, que celui-ci soit selon un mode Intra, Inter ou autres, d'éviter d'inclure dans le signal à transmettre au décodeur, le ou les indices de compétition calculés après mise en compétition de multiples paramètres de codage. Seule l'information relative à la manipulation du terminal par l'utilisateur, brute ou bien transformée, a besoin d'être transmise dans le signal de données à destination du décodeur.

Il en résulte ainsi une diminution non négligeable du coût de signalisation, dans la mesure où une telle disposition est reproductible au niveau du décodeur.

Une telle disposition a également pour but d'exploiter avantageusement les informations relatives à la manipulation du terminal par l'utilisateur, soit pour affiner la prédiction des informations de mouvement dans le cadre d'un codage de l'image en Inter, soit pour améliorer les performances de codage en affinant la sélection du mode de codage optimal. Une telle exploitation consiste à transformer ces informations en données d'image de façon à ce que ces dernières soit directement compréhensibles par le codeur.

Par information relative à la manipulation du terminal par un utilisateur, en relation avec l'image courante capturée, on entend toute donnée délivrée en sortie d'un capteur installé dans le terminal de capture d'images, telle qu'en particulier :
- une accélération tangentielle et centripète mesurée par un accéléromètre,
- une vitesse angulaire mesurée par un gyroscope,
- une variation de champ magnétique mesurée par un magnétomètre,
- une illumination mesurée par un capteur d'illumination,
- etc.....

Par information relative à la manipulation du terminal par un utilisateur, en relation avec l'image courante capturée, on entend également :
- tout déplacement, accélération, etc...du terminal de capture d'images effectué à l'initiative de l'utilisateur lorsque ce dernier capture une image,
- une donnée résultant de l'interaction de l'utilisateur sur l'image courante capturée au moyen d'une interface de commande, telle que par exemple un bouton du terminal.

Selon un premier exemple de donnée résultant de l'interaction de l'utilisateur sur l'image courante capturée au moyen d'une interface de commande, une telle information relative à la manipulation du terminal par un utilisateur consiste dans les pixels d'une image transformés à la suite d'une homographie mise en oeuvre dans le cas où l'utilisateur sélectionne le bouton « zoom avant » ou « zoom arrière » de son terminal pour respectivement agrandir ou diminuer l'image courante affichée.

Selon un deuxième exemple de donnée résultant de l'interaction de l'utilisateur sur l'image courante capturée au moyen d'une interface de commande, une telle information relative à la manipulation du terminal par un utilisateur consiste dans les pixels d'une image ayant subi une transformation à la suite d'une homographie mise en oeuvre dans le cas où l'utilisateur sélectionne le bouton « panoramique » de son terminal pour visualiser l'image courante affichée sous forme panoramique.

Selon un troisième exemple de donnée résultant de l'interaction de l'utilisateur sur l'image courante capturée au moyen d'une interface de commande, une telle information relative à la manipulation du terminal par un utilisateur consiste dans les pixels d'une image transformés à la suite d'une rotation mise en oeuvre dans le cas où l'utilisateur sélectionne le bouton « rotation » de son terminal pour faire pivoter l'image courante affichée dans le sens horaire ou anti-horaire.

Quant aux différents déplacements, accélération, etc...du terminal de capture d'images qui sont effectués par l'utilisateur, ils sont mesurés par les capteurs précités.

Au sens de l'invention, on entend par information de mouvement associée à une portion de l'image courante un vecteur de mouvement, dans le cas d'un mouvement linéaire simple tel qu'une translation, ou bien encore une matrice de vecteurs de mouvement dans le cas d'un mouvement plus complexe tel qu'une rotation, une homographie, etc.....

Au sens de l'invention, une portion de l'image courante est par exemple une zone particulière de l'image. Si par exemple l'image représente une plage, une première zone de l'image est le ciel et une deuxième zone de l'image est le sable.

Selon un autre exemple, une portion de l'image courante est une unité de codage telle que définie dans la norme HEVC.

Ainsi, le procédé de codage présente l'avantage de pouvoir être adapté à des codeurs de standards différents.

Selon un mode de réalisation particulier, le procédé de codage comprend en outre les étapes consistant à :
- élaborer un signal de données contenant les données encodées de la portion de l'image courante,
- insérer dans le signal de données soit l'information relative à la manipulation du terminal, soit la donnée relative à l'image courante qui a été obtenue par transformation de l'information relative à la manipulation du terminal.

Dans le cas où un tel signal de données est transmis au décodeur, l'insertion directement dans le signal de l'information relative à la manipulation du terminal oblige le décodeur à effectuer une transformation de cette information pour obtenir en correspondance une donnée relative à l'image courante. Une telle disposition est avantageuse lorsque la donnée transformée est coûteuse à transmettre. Par ailleurs, une telle disposition permet avantageusement au décodeur de déterminer de lui-même une variation de mouvement entre deux images successives, de même que les caractéristiques (translation, rotation, homographie, etc...) de cette variation, sans que le codeur n'ait à lui transmettre plus d'informations sur une telle variation.

Dans le cas où un tel signal de données est transmis au décodeur, l'insertion dans le signal de la donnée relative à l'image courante qui a été obtenue par transformation de l'information relative à la manipulation du terminal permet au décodeur de lire, dans le signal reçu, directement cette donnée qui est immédiatement compréhensible par celui-ci.

L'invention concerne également un dispositif de codage d'au moins une image courante comme défini dans la revendication 4.

Un tel dispositif de codage est notamment adapté pour mettre en oeuvre le procédé de codage précité.

En particulier, un tel dispositif de codage est apte à être installé dans un terminal de capture d'images tel que par exemple un téléphone portable, un smartphone (« téléphone intelligent »), une tablette, etc....

De façon correspondante au procédé de codage précité, l'invention concerne un procédé de décodage d'un signal de données représentatif d'au moins une image courante, comme défini dans la revendication 7.

Une telle disposition permet au décodeur de déterminer, grâce à une information relative à la manipulation du terminal par l'utilisateur ayant trait à la capture de l'image courante, une information de mouvement qui est associée à la portion d'image courante à reconstruire, de la façon suivante :
- soit directement dans le signal de données si l'information de mouvement a été obtenue ultérieurement au codage par transformation de l'information relative à la manipulation du terminal,
- soit à partir de l'information brute relative à la manipulation du terminal transmise telle qu'elle dans le signal de données.

On entend par information de mouvement associée à l'image courante un vecteur de mouvement, dans le cas d'un mouvement linéaire simple tel qu'une translation, ou bien une matrice de vecteurs de mouvement dans le cas d'un mouvement plus complexe tel qu'une rotation, une homographie, etc.....

Au cours de l'étape de reconstruction de l'information de mouvement associée à la portion de l'image courante, l'information de mouvement associée à l'image courante est sélectionnée comme information de mouvement de prédiction de l'information de mouvement associée à la portion d'image courante ou bien comme information de mouvement dont hérite l'information de mouvement associé à la portion d'image courante.

Une telle disposition permet avantageusement au décodeur d'exploiter une information relative à la manipulation du terminal afin de mettre en oeuvre la prédiction ou l'héritage d'une information de mouvement courante sans à avoir besoin de lire dans le signal l'indice de cette information et l'indice de l'image de référence associée à cette information.

Selon le type de codage qui a été mis en oeuvre, la prédiction de l'information de mouvement mise en oeuvre au décodage nécessite éventuellement la lecture dans le signal reçu en provenance du codeur de données résiduelles de cette information de mouvement.

Selon encore un autre mode de réalisation particulier, au cours de l'étape de reconstruction de l'information de mouvement associée à la portion de l'image courante :
- soit une information de mouvement de prédiction de l'information de mouvement associée à la portion de l'image courante est sélectionnée dans une liste d'informations de mouvement de prédiction candidates, dans laquelle a été ajoutée préalablement l'information de mouvement associée à l'image courante,
- soit une information de mouvement dont hérite l'information de mouvement associée à la portion de l'image courante est sélectionnée dans une liste d'informations de mouvement candidates à l'héritage, dans laquelle a été ajoutée préalablement l'information de mouvement associée à l'image courante.

Une telle disposition permet avantageusement au décodeur d'exploiter une information relative à la manipulation du terminal afin de déterminer de façon autonome une information de mouvement de prédiction ou d'héritage destinée à être ajoutée aux listes d'informations de mouvement de prédiction ou d'héritage existantes, telles que par exemple la liste de vecteurs de mouvement du mode de décodage AMVP (pour « Advanced Motion Vector Prédiction » en anglais) ou bien la liste de vecteurs de mouvement du mode de décodage Merge, toutes deux bien connues dans la norme HEVC.

Ainsi, le décodeur bénéficie d'un choix plus important d'informations de mouvement de prédiction ou d'héritage, ce qui lui permet de sélectionner l'information de mouvement la plus adaptée pour la prédiction ou l'héritage du mouvement de la portion d'image courante, tout en permettant d'économiser les ressources en calculs au codage/décodage.

Selon encore un autre mode de réalisation particulier, la au moins une caractéristique du mode de décodage de la portion de l'image courante est une précision du mouvement de la portion d'image courante déterminée conformément à une valeur de précision du mouvement de l'image courante ayant été associée préalablement à une valeur de l'information de mouvement de l'image courante.

Une telle disposition permet avantageusement au décodeur d'exploiter une information relative à la manipulation du terminal afin de déterminer de façon autonome si, pour un mode de codage signalé classiquement par le codeur, par exemple le mode Inter, la résolution du mouvement de l'image capturée a été modifiée ou non par rapport à l'image précédente. L'indication d'une telle modification de résolution n'a ainsi pas besoin d'être transmise dans le signal de données en provenance du codeur puisque le décodeur sait interpréter de lui-même l'information relative à la manipulation du terminal en une résolution de mouvement d'une valeur donnée, telle que par exemple en une résolution de vecteur de mouvement au 16^{ème} de pixel, au 8^{ème} de pixel,..., au pixel près.

Selon encore un autre mode de réalisation particulier, la au moins une caractéristique du mode de décodage de la portion de l'image courante est un type de mouvement de la portion de l'image courante déterminé conformément à des paramètres de mouvement de l'image courante qui ont été associés préalablement à la donnée relative à l'image courante identifiée dans le signal ou bien déterminée par transformation de l'information identifiée dans le signal.

Une telle disposition permet avantageusement au décodeur d'exploiter une information relative à la manipulation du terminal, afin de déterminer de façon autonome, pour un mode de codage signalé classiquement par le codeur, par exemple le mode Inter, le type du mouvement de l'image capturée, tel que par exemple linéaire, affine, homographique, etc...L'indication du type de mouvement n'a ainsi pas besoin d'être transmise dans le signal de données en provenance du codeur puisque le décodeur sait interpréter de lui-même l'information relative à la manipulation du terminal en un type donné de mouvement.

Selon encore un autre mode de réalisation particulier, la au moins une caractéristique du mode de décodage de la portion de l'image courante est un ordre de décodage des pixels de la portion de l'image courante déterminé conformément à un type d'ordre de décodage des pixels de l'image courante qui a été associé préalablement à la donnée relative à l'image courante identifiée dans le signal ou bien déterminée par transformation de l'information identifiée dans le signal.

Une telle disposition permet avantageusement au décodeur d'exploiter une information relative à la manipulation du terminal afin de déterminer de façon autonome si, pour un mode de codage signalé classiquement par le codeur, par exemple le mode de lecture des portions de l'image courante qui a été utilisé, l'ordre de codage des pixels de la portion d'image courante a été modifié ou non, ceci afin d'appliquer l'ordre de décodage correspondant pour reconstruire les pixels de la portion d'image courante. L'indication d'une telle modification de l'ordre de codage et des différents ordres de codage possibles n'a ainsi pas besoin d'être transmise dans le signal de données en provenance du codeur puisque le décodeur sait interpréter de lui-même l'information relative à la manipulation du terminal en un type donné d'ordre de décodage à appliquer.

Selon encore un autre mode de réalisation particulier, la au moins une caractéristique du mode de décodage de la portion de l'image courante est une direction de prédiction des pixels de la portion de l'image courante déterminée conformément à une valeur d'angle entre l'image courante et une image précédant ladite image courante, une telle valeur d'angle ayant été associée préalablement à la donnée relative à l'image courante identifiée dans le signal ou bien déterminée par transformation de l'information identifiée dans le signal.

Une telle disposition permet avantageusement au décodeur d'exploiter une information relative à la manipulation du terminal afin de déterminer de façon autonome, pour un mode de codage signalé classiquement par le codeur, par exemple le mode Intra, quelle est la direction de prédiction des pixels de la portion d'image courante à reconstruire, sans que le codeur n'ait besoin d'indiquer dans le signal l'ensemble des différentes directions de prédiction possibles.

Selon encore un autre mode de réalisation particulier, la au moins une caractéristique du mode de décodage de la portion de l'image courante est un indicateur d'activation ou de non activation d'un module de filtrage des pixels de la portion de l'image courante déterminé en fonction d'une valeur de luminosité de l'image courante qui a été associée préalablement à la donnée relative à l'image courante identifiée dans le signal ou bien déterminée par transformation de l'information identifiée dans le signal.

Une telle disposition permet avantageusement au décodeur d'exploiter une information relative à la manipulation du terminal afin de déterminer de façon autonome si, pour un mode de codage signalé classiquement par le codeur, par exemple le mode Intra, il convient d'activer ou pas un module de filtrage des pixels de la portion d'image courante à reconstruire. Ainsi par exemple, dans le cas où l'information relative à la manipulation du terminal est une accélération mesurée par un accéléromètre et que la valeur de cette accélération est élevée, le décodeur déduit directement de cette dernière qu'il convient d'activer un filtre anti-blocs ou d'atténuation d'effets de blocs (« deblocking filter » en anglais). Selon un autre exemple, dans le cas où l'information relative à la manipulation du terminal est une illumination mesurée par un capteur d'illumination et que la valeur de cette illumination est faible, caractérisant de ce fait une zone sombre de l'image, le décodeur en déduit directement qu'il convient d'activer un filtre de débruitage.

Les différents modes ou caractéristiques de réalisation précités peuvent être ajoutés indépendamment ou en combinaison les uns avec les autres, aux étapes du procédé de décodage défini ci-dessus.

De façon correspondante, l'invention concerne aussi un dispositif de décodage d'un signal de données représentatif d'au moins une image courante, comme défini dans la revendication 10.

Un tel dispositif de décodage est notamment adapté pour mettre en oeuvre le procédé de décodage précité.

En particulier, un tel dispositif de décodage est apte à être installé dans un terminal d'affichage d'images tel que par exemple un récepteur de télévision, un téléphone portable, un smartphone (« téléphone intelligent »), une tablette, etc....

L'invention concerne encore un programme d'ordinateur comme défini dans une des revendications 5 ou 11.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise également un support d'enregistrement comme défini dans une des revendications 6 ou 12.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'enregistrement peut être un circuit intégré dans lequel le programme est incorporé, le circuit étant adapté pour exécuter ou pour être utilisé dans l'exécution du procédé de codage ou de décodage précité.

### Brève description des dessins

D'autres caractéristiques et avantages apparaîtront à la lecture d'un mode de réalisation préféré décrit en référence aux figures dans lesquelles:
- la figure 1 représente les étapes du procédé de codage selon l'invention,
- la figure 2 représente un mode de réalisation d'un dispositif de codage selon l'invention,
- la figure 3A représente un premier exemple de la structure du signal délivré par le dispositif de codage de la figure 2,
- la figure 3B représente un deuxième exemple de la structure du signal délivré par le dispositif de codage de la figure 2,
- la figure 4 représente un mode de réalisation d'un dispositif de décodage selon l'invention,
- la figure 5 représente les étapes du procédé de décodage selon l'invention.

### Description détaillée de la partie codage

Un mode de réalisation de l'invention va maintenant être décrit, dans lequel le procédé de codage selon l'invention est utilisé pour coder une image ou une séquence d'images selon un signal binaire proche de celui qu'on obtient par un codage mis en oeuvre dans un codeur conforme à l'une quelconque des normes de codage vidéo actuelles ou à venir.

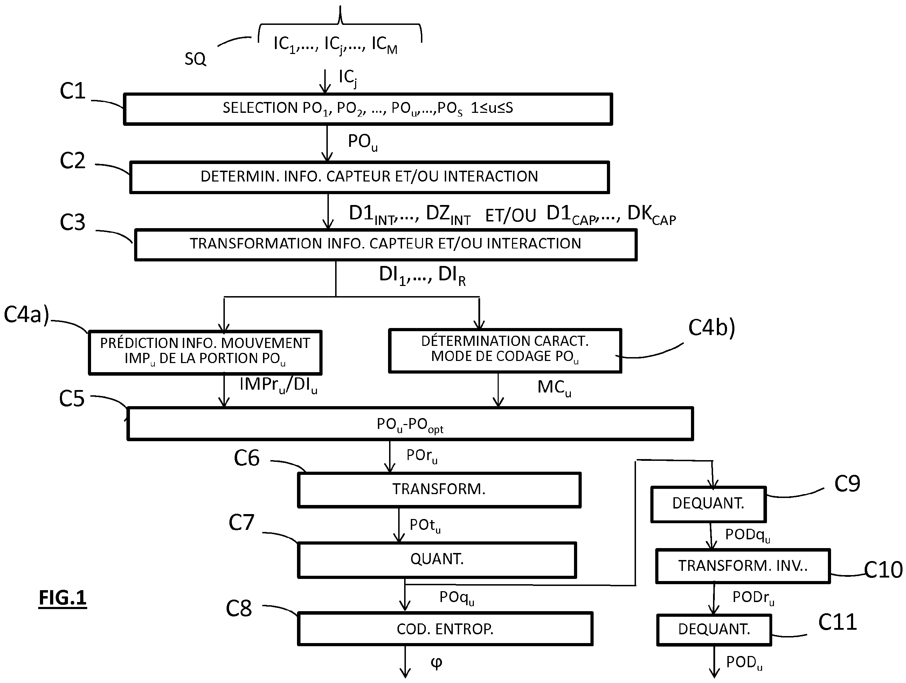

Dans ce mode de réalisation, le procédé de codage selon l'invention est par exemple implémenté de manière logicielle ou matérielle par modifications d'un tel codeur. Le procédé de codage selon l'invention est représenté sous la forme d'un algorithme comportant des étapes C1 à C11 telles que représentées à la **figure 1****.**

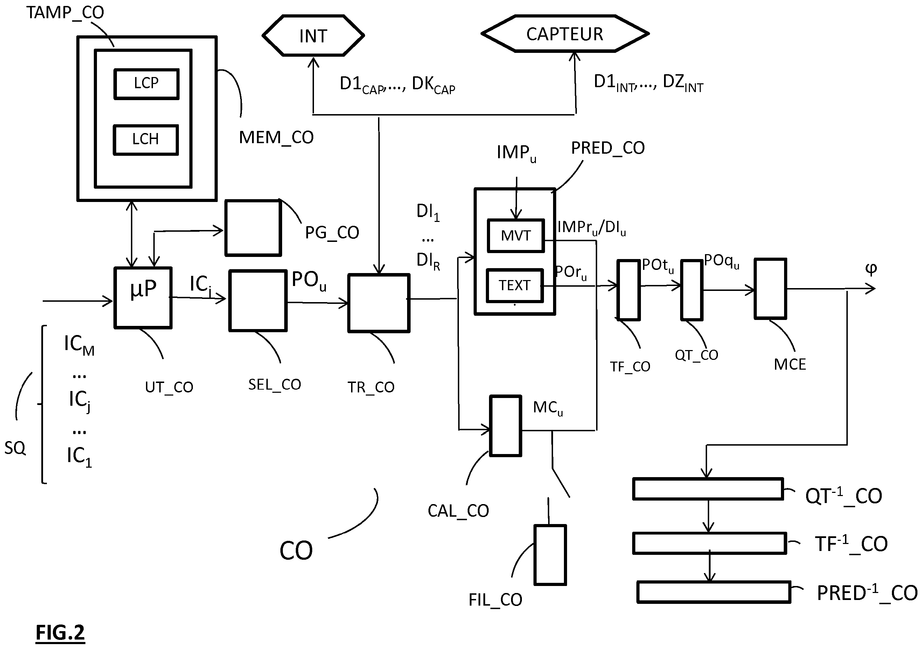

Selon le mode de réalisation de l'invention, le procédé de codage selon l'invention est implémenté dans un dispositif de codage ou codeur CO représenté à la **figure 2****.**

Comme illustré en **figure 2****,** un tel codeur comprend une mémoire MEM_CO comprenant une mémoire tampon TAMP_CO, une unité de traitement UT_CO équipée par exemple d'un microprocesseur µP et pilotée par un programme d'ordinateur PG_CO qui met en oeuvre le procédé de codage selon l'invention. A l'initialisation, les instructions de code du programme d'ordinateur PG_CO sont par exemple chargées dans une mémoire RAM (non représentée) avant d'être exécutées par le processeur de l'unité de traitement UT_CO.

Un tel codeur CO est installé dans un terminal de capture d'images (non représenté) tel que par exemple un téléphone portable, un smartphone (« téléphone intelligent »), une tablette, etc....

Le procédé de codage représenté sur la **figure 1** s'applique à toute image courante ICⱼ d'une séquence SQ d'images IC₁, ..., ICⱼ,..., IC_{M} (1≤j≤M) à coder qui sont capturées par l'un des terminaux de capture d'images précités dans lequel est installé le codeur CO.

Au cours d'une étape C1 représentée à la **figure 1****,** pour une image courante ICⱼ considérée, il est procédé à la sélection d'une portion courante POᵤ à coder de l'image ICⱼ, parmi plusieurs portions PO₁, PO₂, ..., POᵤ,..., POs de cette image.

Selon l'invention, une telle portion est par exemple :
- une zone de pixels particulière de l'image, telle que par exemple une zone de texture, de couleur, ou de mouvement homogène,
- un bloc de pixels de l'image de taille prédéfinie dans le cas où l'image courante a été partitionnée préalablement en blocs comme par exemple dans la norme AVC, H.264, HEVC...

L'étape C1 précitée est mise en oeuvre par un module logiciel de sélection SEL_CO représenté sur la **figure 2****,** lequel module est piloté par le microprocesseur µP de l'unité de traitement UT_CO.

Au cours d'une étape C2 représentée à la **figure 1****,** il est procédé à la détermination d'au moins une information relative à la manipulation du terminal précité par un utilisateur, en relation avec l'image courante ICⱼ capturée.

L'étape C2 précitée est mise en oeuvre par un module logiciel de traitement TR_CO représenté sur la **figure 2****,** lequel module est piloté par le microprocesseur µP de l'unité de traitement UT_CO.

Selon un premier contexte de capture de l'image courante, une telle information est délivrée par au moins un capteur de données installé dans le terminal précité. Cette information est notée D1_{CAP}. Dans le cas où le terminal de capture d'images contient une pluralité de capteurs, une pluralité d'informations D1_{CAP}, D2_{CAP},..., DK_{CAP} (K≥1) est respectivement délivrée.

A titre d'exemples non limitatifs de telles informations consistent en :
- une accélération (m/s²) du terminal selon trois axes différents, telle que mesurée par un accéléromètre lors de la capture de l'image courante,
- une position angulaire (rad/s) du terminal selon un, deux ou trois axes, telle que mesurée par un gyroscope lors de la capture de l'image courante,
- l'altitude, longitude et latitude (m) du terminal, telles que mesurées par un récepteur GPS (de l'anglais « *Global Positioning System* ») lors de la capture de l'image courante,
- la position angulaire (degrés) du terminal par rapport au champ magnétique terrestre, telle que mesurée par une boussole, lors de la capture de l'image courante,
- le champ magnétique (Tesla) du terminal, telle que mesuré par un magnétomètre, lors de la capture de l'image courante,
- la luminosité ambiante (Lux) mesurée par un capteur de luminosité, lors de la capture de l'image courante,
- le mouvement (Faraday) de l'utilisateur lors de la capture de l'image courante, tel que mesuré par un capteur de proximité,
- la luminosité (Lux) mesurée par un capteur d'images rétroéclairé, lors de la capture de l'image courante,
- etc...

Selon un deuxième contexte de capture de l'image courante, une telle information est obtenue suite à au moins une action de l'utilisateur sur le terminal de capture d'images, en relation avec l'image courante capturée. Une telle action consiste à interagir avec le terminal de capture d'images, via une touche physique ou tactile du terminal ou bien via directement l'écran du terminal, pour par exemple effectuer un zoom avant ou un zoom arrière de l'image courante capturée, la sélection d'une zone de l'image courante capturée afin d'en améliorer la qualité, etc....

Selon ce deuxième contexte, l'information est notée D1_{INT}. Dans le cas où l'utilisateur effectue différentes actions en relation avec l'image courante capturée, différentes informations D1_{INT}, D2_{INT},..., DZ_{INT} (Z≥1) sont respectivement obtenues.

Au cours d'une étape C3 représentée à la **figure 1****,** le module de traitement TR_CO procède à la transformation de la ou des informations déterminées à l'étape C2 en une donnée ou en plusieurs données relatives à l'image courante ICⱼ qui soi(en)t directement exploitable(s) par le codeur CO. De telles données d'image courante sont notées DI₁, DI₂,..., DI_{R} (R≥1) sur les **figures 1** et **2****.**

Selon l'invention, la ou les données d'image courante obtenues à l'étape C3 sont destinées :
- soit à prédire au moins une information de mouvement IMPᵤ associée à la portion POᵤ d'image courante,
- soit à déterminer au moins une caractéristique d'un mode de codage MCᵤ associé à la portion POᵤ d'image courante, tel que par exemple un mode de codage Intra, Inter, Merge, etc....

Une telle prédiction est mise en oeuvre au cours d'une étape C4a) représentée à la **figure 1****.** L'étape C4a) est mise en oeuvre par un module logiciel de prédiction PRED_CO représenté sur la **figure 2****,** lequel module est piloté par le microprocesseur µP de l'unité de traitement UT_CO.

Une telle détermination d'au moins une caractéristique d'un mode de codage MCᵤ est mise en oeuvre au cours d'une étape C4b) représentée à la **figure 1****.** L'étape C4b) est mise en oeuvre par un module logiciel de calcul CAL_CO représenté sur la **figure 2****,** lequel module est piloté par le microprocesseur µP de l'unité de traitement UT_CO.

Bien entendu, les étapes C4a) et C4b) peuvent aussi bien être mises en oeuvre séparément qu'en combinaison.

Selon une première alternative de l'étape C4a), le module PRED_CO calcule la différence entre au moins une desdites données d'image courante DI₁, DI₂,..., DI_{R} et l'information de mouvement IMPᵤ associée à la portion POᵤ d'image courante.

Un résiduel IMPrᵤ d'information de mouvement est alors obtenu à l'issue de l'étape C4a).

Selon une deuxième alternative de l'étape C4a), le module PRED_CO affecte par héritage à l'information de mouvement IMPᵤ associée à la portion POᵤ d'image courante au moins une desdites données d'image courante DI₁, DI₂,..., DI_{R}.

Une information de mouvement DIᵤ (1≤u≤R) héritée est alors obtenue à l'issue de l'étape C4a).

Selon une troisième alternative de l'étape C4a), au moins une desdites données d'image courante DI₁, DI₂,..., DI_{R} est simplement ajoutée à une liste LCP d'informations de mouvement de prédiction candidates stockée dans la mémoire tampon TAMP_CO de la **figure 2****.**

Ainsi, au cours de l'étape C4a), une telle donnée d'image courante pourra éventuellement être sélectionnée dans la liste LCP par le module de prédiction PRED_CO, suite à une mise en compétition des informations de mouvement de prédiction de la liste LCP, par exemple par minimisation d'un critère débit distorsion bien connu de l'homme du métier.

La liste LCP est par exemple une liste de prédicteurs de mouvement du mode de codage AMVP.

Selon une quatrième alternative de l'étape C4a), au moins une desdites données d'image courante DI₁, DI₂,..., DI_{R} est simplement ajoutée à une liste LCH d'informations de mouvement candidates à l'héritage, telle que stockée dans la mémoire tampon TAMP_CO de la **figure 2****.**

Ainsi, au cours de l'étape C4a), une telle donnée d'image courante pourra éventuellement être sélectionnée dans la liste LCH par le module de prédiction PRED_CO, suite à une mise en compétition des informations de mouvement candidates à l'héritage de la liste LCH, par exemple par minimisation d'un critère débit distorsion bien connu de l'homme du métier.

La liste LCH est par exemple une liste d'informations de mouvement du mode de codage MERGE.

Selon un exemple pour lequel au moins une donnée d'image courante est utilisée à des fins de prédiction d'information de mouvement, une telle donnée d'image courante est une information de mouvement IMIⱼ associée à l'image courante ICⱼ.

L'information de mouvement IMPᵤ associée à la portion POᵤ d'image courante et l'information de mouvement IMIⱼ associée à l'image courante obtenue à l'issue de l'étape C3 sont par exemple respectivement un vecteur de mouvement courant MVᵤ associé à la portion POᵤ d'image courante et un vecteur de mouvement MVⱼ associée à l'image courante ICⱼ.

Le vecteur de mouvement MVⱼ associée à l'image courante ICⱼ a par exemple été obtenu au cours de l'étape C3 par association d'une valeur d'accélération du terminal de capture d'images suivant un axe, par exemple horizontal, telle que mesurée par un accéléromètre installé dans le terminal, au moment où l'utilisateur a capturé l'image courante ICⱼ.

A titre d'alternative, au cours de l'étape C3 précitée, plusieurs données d'image courante au lieu d'une seule pourraient être obtenues. Ces différentes données d'image courante constituent par exemple une matrice de vecteurs de mouvement associés à différentes valeurs de déplacement telles que mesurées par exemple par l'accéléromètre le long des trois axes X, Y et Z lors de la capture de l'image courante, ou encore des variations d'altitude et/ou de longitude et/ou de latitude entre l'image courante ICj et l'image précédente ICⱼ₋₁, telles que mesurées par le récepteur GPS, lors de la capture de l'image courante.

Différents exemples de caractéristique(s) de mode(s) de codage déterminée(s) au cours de l'étape C4b) vont maintenant être décrits.

Selon un premier cas d'usage, une caractéristique du mode de codage MCᵤ de la portion POᵤ de l'image courante est une précision du mouvement de la portion d'image courante déterminée conformément à une valeur de précision du mouvement de l'image courante ayant été associée préalablement à une valeur d'information de mouvement de l'image courante ICⱼ par le module de traitement TR_CO de la **figure 2****.**

Par exemple, la valeur d'information de mouvement de l'image courante ICⱼ est la valeur d'un vecteur de mouvement MVⱼ associée à l'image courante ICⱼ tel qu'obtenu par exemple au cours de l'étape C3 précitée par association d'une valeur d'accélération du terminal de capture d'images suivant un axe, par exemple horizontal, telle que mesurée par un accéléromètre installé dans le terminal, au moment où l'utilisateur a capturé l'image courante ICⱼ. La valeur du vecteur de mouvement ainsi obtenue est significative de la précision du mouvement de l'image courante ICⱼ et correspond à une résolution de mouvement d'une valeur donnée, telle que par exemple une résolution de vecteur de mouvement au 16^{ème} de pixel, au 8^{ème} de pixel,..., au pixel près.

Selon un deuxième cas d'usage, une caractéristique du mode de codage MCᵤ de la portion POᵤ de l'image courante est un type de mouvement de la portion de l'image courante déterminé conformément à des paramètres de mouvement de l'image courante ICⱼ qui ont été associés préalablement à au moins une desdites données d'image courante DI₁, DI₂,..., DI_{R} par le module de traitement TR_CO de la **figure 2****.**

Une telle donnée d'image courante est la valeur d'un vecteur de mouvement MVⱼ associée à l'image courante ICⱼ tel qu'obtenu par exemple au cours de l'étape C3 précitée par association d'une valeur d'accélération du terminal de capture d'images suivant un axe, par exemple horizontal, telle que mesurée par un accéléromètre installé dans le terminal, au moment où l'utilisateur a capturé l'image courante ICⱼ. La valeur du vecteur de mouvement MVⱼ est définie par deux paramètres de mouvement qui sont les coordonnées de ce vecteur. Le module de calcul CAL_CO de la **figure 2** en déduit alors que le mouvement de l'image courante ICⱼ est de type linéaire et associe une caractéristique du mode de codage MCᵤ de la portion d'image courante, le mode Inter par exemple, à ce type linéaire de mouvement.

A titre d'alternative de cet exemple, au cours de l'étape C3 précitée, plusieurs données d'image courante au lieu d'une seule pourraient être obtenues. Ces différentes données d'image courante constituent par exemple une matrice de vecteurs de mouvement associés à différentes valeurs de déplacement telles que mesurées par exemple par l'accéléromètre le long des trois axes X, Y et Z lors de la capture de l'image courante, ou encore des variations d'altitude et/ou de longitude et/ou de latitude entre l'image courante ICj et l'image précédente ICⱼ₋₁, telles que mesurées par le récepteur GPS, lors de la capture de l'image courante. Si trois valeurs de vecteurs de mouvement sont obtenues en association avec respectivement trois accélérations sur les axes X, Y et Z ou avec trois variations d'altitude, longitude et latitude, ces trois valeurs définissent six paramètres de mouvement. Le module de calcul CAL_CO de la **figure 2** en déduit alors que le mouvement de l'image courante ICⱼ est de type affine et détermine qu'une caractéristique du mode de codage MCᵤ de la portion d'image courante, le mode Inter par exemple, est un mouvement de type affine.

Selon un troisième cas d'usage, une caractéristique du mode de codage MCᵤ de la portion d'image courante POᵤ est un ordre de codage des pixels de la portion de l'image courante déterminé conformément à un type d'ordre de codage des pixels de l'image courante ICⱼ qui a été associé préalablement à au moins une desdites données d'image courante DI₁, DI₂,..., DI_{R} par le module de traitement TR_CO de la **figure 2****.**

Par exemple, une telle donnée d'image courante est la valeur d'un vecteur de mouvement MVⱼ associée à l'image courante ICⱼ tel qu'obtenue par exemple au cours de l'étape C3 précitée par association d'une valeur d'accélération du terminal de capture d'images suivant un axe, par exemple vertical, telle que mesurée par un accéléromètre installé dans le terminal, au moment où l'utilisateur a capturé l'image courante ICⱼ. La direction verticale du vecteur MVᵢ permet au module de calcul CAL_CO de la **figure 2** de déduire qu'une caractéristique du mode de codage MCᵤ de la portion d'image courante est un ordre de codage vertical des pixels de la portion POᵤ d'image courante.

Selon un quatrième cas d'usage, une caractéristique du mode de codage MCᵤ de la portion d'image courante POᵤ est une direction de prédiction des pixels de la portion de l'image courante déterminée conformément à une valeur d'angle entre l'image courante et une image précédant ladite image courante, ladite valeur d'angle ayant été associée préalablement à au moins une desdites données d'image courante DI₁, DI₂,..., DI_{R} par le module de traitement TR_CO de la **figure 2****.**

Une telle donnée d'image courante est une direction de prédiction du mode de codage Intra associé à l'image courante ICⱼ telle qu'obtenue par exemple au cours de l'étape C3 précitée par association d'une valeur de variation angulaire entre l'image courante ICⱼ et une image ICⱼ₋₁ précédant l'image courante, telle que mesurée par exemple par un gyroscope installé dans le terminal de capture d'images, au moment où l'utilisateur a capturé l'image courante. Une telle direction de prédiction Intra permet au module de calcul CAL_CO de la **figure 2** de déduire qu'une caractéristique du mode de codage MCᵤ de la portion d'image courante est cette direction de prédiction Intra pour les pixels de la portion POᵤ d'image courante.

Selon un cinquième cas d'usage, une caractéristique du mode de codage MCᵤ de la portion d'image courante POᵤ est un indicateur d'activation ou de non activation d'un module de filtrage des pixels de la portion de l'image courante déterminé en fonction d'une valeur de luminosité de l'image courante qui a été associée préalablement à au moins une desdites données d'image courante DI₁, DI₂,..., DI_{R} par le module de traitement TR_CO de la **figure 2****.**

Un module de filtrage, noté FIL_CO, est représenté sur la **figure 2****.** Il s'agit par exemple, selon le contexte de codage utilisé, d'un filtre anti-blocs ou d'atténuation d'effets de blocs ou bien encore un filtre de débruitage.

Selon un premier exemple, une telle donnée d'image courante est une valeur d'accélération mesurée par un accéléromètre installé dans le terminal de capture d'images. En fonction de la valeur plus ou moins élevée de cette accélération, le module de calcul CAL_CO déclenche ou non l'activation du module de filtrage FIL_CO, ici un filtre anti-blocs.

Selon un deuxième exemple, une telle donnée d'image courante est une valeur d'illumination mesurée par un capteur d'illumination installé dans le terminal de capture d'images. En fonction de la valeur plus ou moins élevée de cette valeur d'illumination, le module de calcul CAL_CO de la **figure 2** déclenche ou non l'activation du module de filtrage FIL_CO. En particulier, si la valeur d'illumination est faible, caractérisant de ce fait une zone sombre de l'image, l'activation du module de filtrage FIL_CO, ici un filtre de débruitage, est activée.

Bien entendu, les cas d'usage qui viennent d'être mentionnés ci-dessus peuvent être combinés de façon à déterminer plusieurs caractéristiques de mode de codage associé à la portion d'image courante POᵤ.

Au cours d'une étape C5 représentée à la **figure 1****,** il est procédé à la comparaison des données relatives à la portion POᵤ d'image courante aux données d'une portion d'image prédictrice optimale POₒₚₜ qui a été sélectionnée suite à une mise en compétition de modes de codage prédéterminés, incluant en particulier les modes de codage selon les premier, deuxième et quatrième cas d'usage précités, une telle sélection étant par exemple mise en oeuvre par minimisation d'un critère débit distorsion bien connu de l'homme du métier. Une telle étape C5 est mise en oeuvre par le module de prédiction PRED_CO représenté sur la **figure 2****.**

La portion d'image POₒₚₜ est considérée comme une approximation de la portion d'image courante POᵤ

Plus précisément, au cours de cette étape, il est procédé classiquement au calcul de la différence entre la portion d'image prédictrice optimale POₒₚₜ et la portion d'image courante POᵤ.

Une portion d'image résiduelle POrᵤ est alors obtenue à l'issue de l'étape C5.

Au cours d'une étape C6 représentée à la **figure 1****,** il est procédé à la transformation de la portion d'image résiduelle POrᵤ selon une opération classique de transformation directe telle que par exemple une transformation en cosinus discrète de type DCT ou une transformation en ondelettes du type DWT, pour produire une portion d'image transformée POtᵤ. Une telle opération est effectuée par un module logiciel TF_CO de transformée, tel que représenté **figure 2****,** lequel module est piloté par le microprocesseur µP de l'unité de traitement UT_CO.

Au cours d'une étape C7 représentée à la **figure 1****,** il est procédé à la quantification de la portion d'image transformée POtᵤ selon une opération classique de quantification, telle que par exemple une quantification scalaire ou vectorielle. Un ensemble POqᵤ de NxN coefficients quantifiés est alors obtenu, où N est un entier supérieur ou égal à 1. Une telle étape est effectuée au moyen d'un module logiciel de quantification QT_CO tel que représenté à la **figure 2****,** lequel module est piloté par le microprocesseur µP de l'unité de traitement UT_CO.

Au cours d'une étape C8 représentée à la **figure 1****,** il est procédé au codage des coefficients de l'ensemble POqᵤ selon un ordre prédéterminé qui est par exemple l'ordre de codage déterminé selon le troisième cas d'usage précité dans le cas où cet ordre de codage a été sélectionné comme optimal suite à une mise en compétition avec d'autres ordres de codage, notamment raster scan. Dans le mode préféré de réalisation, le codage effectué est un codage entropique de type arithmétique ou de Huffman. L'étape C8 consiste alors à :
- lire le ou les symboles d'un ensemble prédéterminé de symboles qui sont associés à la portion d'image courante POᵤ,
- associer des informations numériques, telles que des bits, au(x) symbole(s) lu(s).

Une telle étape de codage entropique est mise en oeuvre par un module logiciel de codage entropique MCE représenté sur la **figure 2****,** lequel module est piloté par le microprocesseur µP de l'unité de traitement UT_CO. Le module de codage entropique MCE est par exemple de type CABAC ("Context Adaptive Binary Arithmetic Coder" en anglais). Il peut également s'agir d'un codeur de Huffman connu en tant que tel.

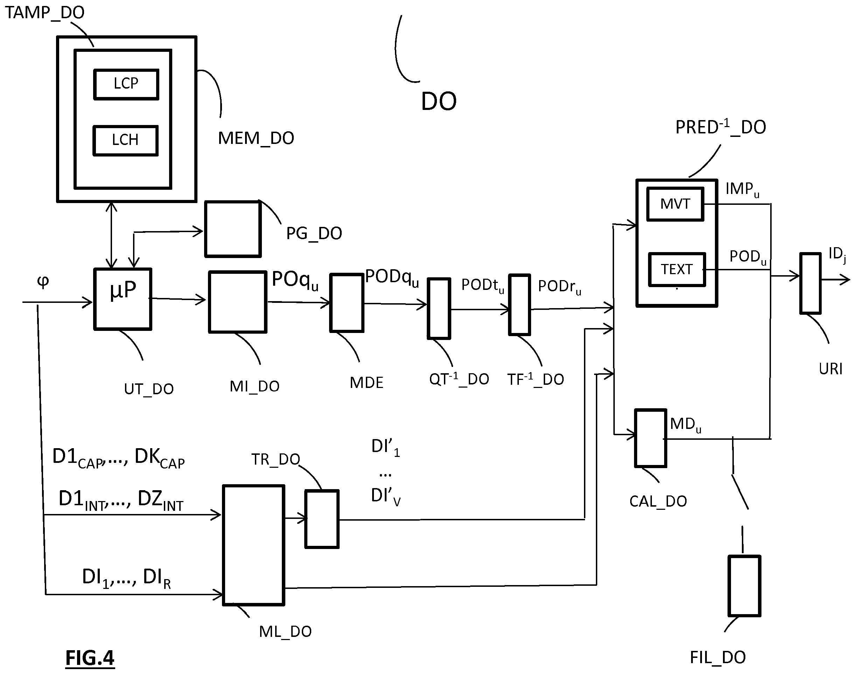

A l'issue de l'étape de codage entropique C8, un signal de données ϕ qui contient l'ensemble de coefficients quantifiés POqᵤ est alors délivré. Un tel signal est ensuite transmis par un réseau de communication (non représenté), à un terminal distant. Celui-ci comporte le décodeur DO représenté à la **figure 4****.**

De façon particulièrement avantageuse, dans le cas où une prédiction du mouvement de la portion d'image courante POᵤ a été effectuée à partir d'au moins une desdites données d'image courante DI₁, DI₂,..., DI_{R} :
- si un résiduel IMPrᵤ d'information de mouvement est obtenu à l'issue de l'étape C4a), seul ce dernier est signalé dans le signal ϕ et non l'indice associé à la au moins une desdites données d'image courante DI₁, DI₂,..., DI_{R} ayant servie pour la prédiction,
- si une information de mouvement DIᵤ est obtenue par héritage à l'issue de l'étape C4a), cette dernière n'est pas signalée dans le signal ϕ.

De façon également avantageuse, dans le cas où une ou plusieurs caractéristiques de modes de codage MCᵤ, telles que déterminées à partir d'au moins une desdites données d'image courante DI₁, DI₂,..., DI_{R} à la suite de l'étape C4b), ont été sélectionnées pour coder la portion POᵤ d'image courante, ces caractéristiques de modes de codage ne sont pas directement signalées dans le signal ϕ.

Selon un premier mode de réalisation, le signal ϕ contient directement la ou les informations relatives à la manipulation du terminal déterminée(s) à l'étape C2 précitée. De telles informations sont par exemple indiquées dans la séquence SQ d'images, chacune à l'aide d'un drapeau qui :
- est mis à 0 pour indiquer au décodeur que ces informations ou certaines d'entre elles n'ont pas été utilisées lors du codage de la portion d'image courante POᵤ,
- est mis à 1 pour indiquer au décodeur que ces informations ou certaines d'entre elles ont été utilisées lors du codage de la portion d'image courante POᵤ.

Dans le cas où de telles informations ont été utilisées pour le codage de la portion d'image courante POᵤ, la valeur de ces informations est signalée dans la portion du signal ϕ qui correspond aux données encodées de la portion courante POᵤ de l'image courante ICⱼ.

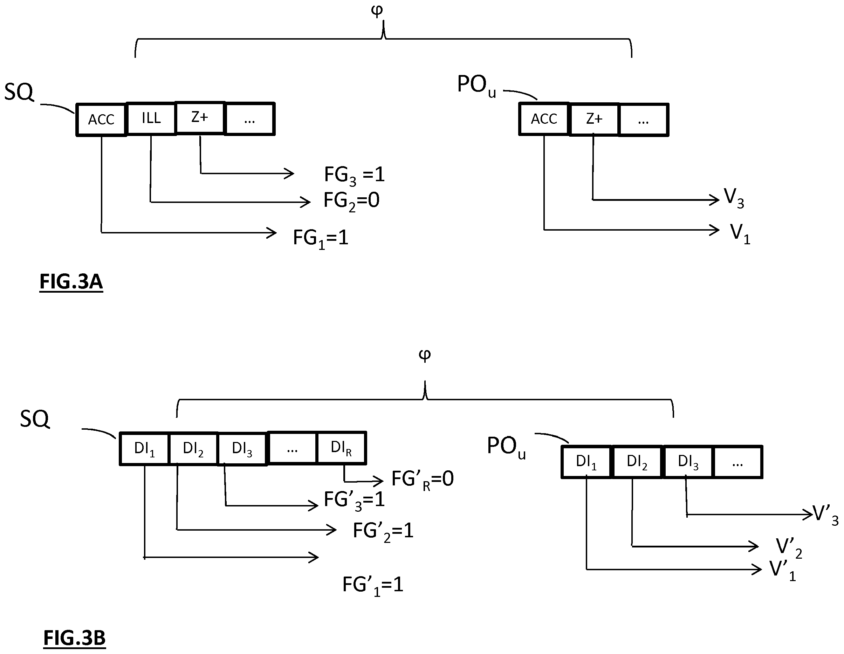

Dans l'exemple représenté sur la **figure 3A****,** il est supposé que trois informations relatives à la manipulation du terminal sont susceptibles d'être utilisées pour le codage de la portion d'image courante POᵤ. Il s'agit par exemple d'une valeur d'accélération ACC, d'une valeur d'illumination ILL et d'une valeur de zoom avant Z+. Si par exemple la valeur d'accélération et la valeur de zoom avant ont été exploitées par le codeur CO, les drapeaux FG₁ et FG₃ associés respectivement à chacune de ces valeurs sont mis à 1. Le drapeau FG₂ associé à la valeur d'illumination est quant à lui mis à 0. La portion du signal ϕ qui correspond aux données encodées de la portion d'image courante POᵤ contient dans ce cas la valeur V₁ d'accélération ACC et la valeur V₃ de zoom avant Z+.

Selon un deuxième mode de réalisation, le signal ϕ contient la ou les données d'image courante DI₁, DI₂,..., DI_{R} obtenues à l'étape C3 précitée, par transformation de la ou des informations relatives à la manipulation du terminal. De telles données sont par exemple indiquées dans la séquence SQ d'images, chacune à l'aide d'un drapeau qui :
- est mis à 0 pour indiquer au décodeur que ces données ou certaines d'entre elles n'ont pas été utilisées lors du codage de la portion d'image courante POᵤ,
- est mis à 1 pour indiquer au décodeur que ces données ou certaines d'entre elles ont été utilisées lors du codage de la portion d'image courante POᵤ.

Dans le cas où de telles données ont été utilisées pour le codage de la portion d'image courante POᵤ, la valeur de ces données est signalée dans la portion du signal ϕ qui correspond aux données encodées de la portion courante POᵤ de l'image courante ICⱼ.

Dans l'exemple représenté sur la **figure 3B****,** il est supposé que trois données d'image courante DI₁, DI₂, DI₃ sont susceptibles d'être utilisées pour le codage de la portion d'image courante POᵤ. Il s'agit par exemple :
- d'une valeur V'₁ de vecteur de mouvement obtenue après transformation d'une valeur d'accélération mesurée par un accéléromètre installé dans le terminal de capture d'images,
- d'une valeur V'₂ d'indice de prédiction Intra obtenue après transformation d'une valeur d'angle entre l'image courante et l'image précédente, telle que mesurée par un gyroscope installé dans le terminal de capture d'images,
- d'une valeur V'₃ d'indice d'activation du module de filtrage FIL_CO de la **figure 2****,** telle qu'obtenue après transformation d'une valeur de luminosité mesurée par un capteur d'illumination installé dans le terminal de capture d'images.

A cet effet, au niveau de la séquence d'images SQ, les drapeaux FG'₁, FG'₂ et FG'₃ associés respectivement à chacune des données d'image courante DI₁, DI₂, DI₃ sont mis à 1, tandis que les drapeaux FG'₄ à FG'_{R} associés respectivement à chacune des données d'image courante DI₄ à DI_{R} sont mis à 0. La portion du signal ϕ qui correspond aux données encodées de la portion d'image courante POᵤ contient dans ce cas les valeurs V'₁, V'₂, V'₃ précitées.

Au cours d'une étape C9 représentée à la **figure 1****,** il est procédé à la déquantification de l'ensemble de coefficients POqᵤ selon une opération classique de déquantification, qui est l'opération inverse de la quantification effectuée à l'étape C7. Un ensemble de coefficients déquantifiés PODqᵤ est alors obtenu.

Une telle étape de déquantification est effectuée par un module logiciel de quantification inverse QT⁻¹_CO, tel que représenté à la **figure 2****,** lequel module est piloté par le microprocesseur µP de l'unité de traitement UT_CO.

Au cours d'une étape C10 représentée à la **figure 1****,** il est procédé à la transformation inverse de l'ensemble de coefficients déquantifiés PODqᵤ qui est l'opération inverse de la transformation directe effectuée à l'étape C6 précitée. Une portion d'image résiduelle décodée PODrᵤ est alors obtenue.

Une telle opération est effectuée par un module logiciel TF⁻¹_CO de transformée inverse, tel que représenté **figure 2****,** lequel module est piloté par le microprocesseur µP de l'unité de traitement UT_CO.

Au cours d'une étape C11 représentée à la **figure 1****,** il est procédé à la construction de la portion d'image courante décodée PODᵤ en ajoutant à la portion d'image prédictrice optimale POₒₚₜ utilisée à l'étape C5 précitée la portion d'image résiduelle décodée PODrᵤ. Il est à noter que cette portion d'image courante décodée PODᵤ est la même que la portion d'image décodée obtenue à l'issue du procédé de décodage de l'image ICⱼ qui sera décrit plus loin dans la description.

Une telle étape est mise en oeuvre par un module logiciel de codage prédictif inverse PRED⁻¹_CO représenté sur la **figure 2****,** lequel module est piloté par le microprocesseur µP de l'unité de traitement UT_CO.

Au cours de l'étape C11 précitée, dans le cas où la première alternative de l'étape C4a) précitée a été mise en oeuvre, il est également procédé à la construction de l'information de mouvement décodée IMPDᵤ en ajoutant à l'une au moins desdites données DI₁, DI₂,..., DI_{R} de l'image courante ayant servi à la prédiction de l'information de mouvement IMPᵤ associée à la portion d'image courante POᵤ le résiduel IMPrᵤ d'information de mouvement obtenu à l'issue de l'étape C4a) précitée.

Les étapes de codage qui viennent d'être décrites ci-dessus sont ensuite mises en oeuvre pour chacune des portions PO₁, PO₂, ..., POᵤ,..., PO_{S} à coder de l'image courante ICⱼ considérée.

### Description détaillée de la partie décodage

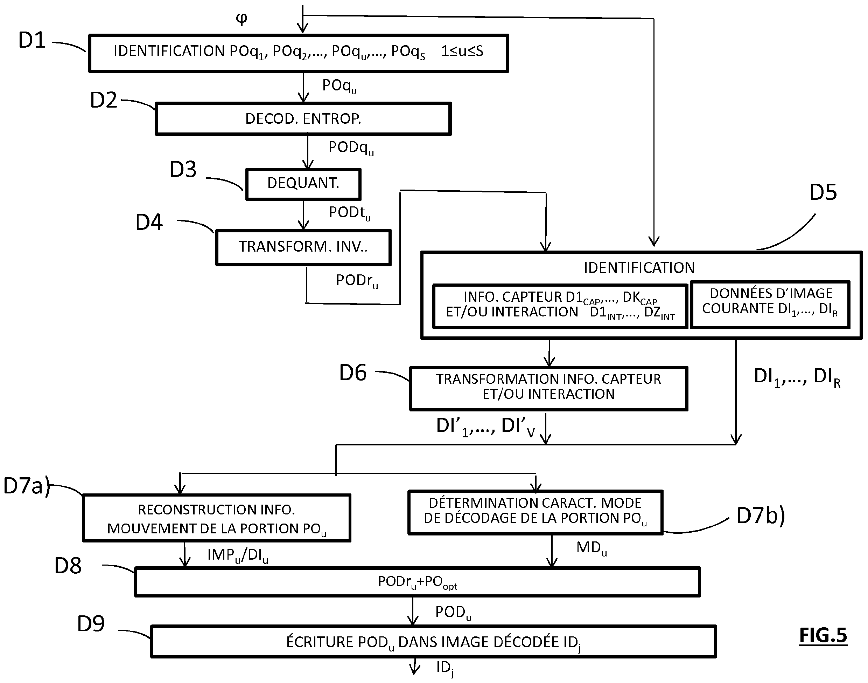

Un mode de réalisation du procédé de décodage selon l'invention va maintenant être décrit, dans lequel le procédé de décodage est implémenté de manière logicielle ou matérielle par modifications d'un décodeur initialement conforme à l'une quelconque des normes de décodage vidéo actuelles ou à venir. Le procédé de décodage selon l'invention est représenté sous la forme d'un algorithme comportant des étapes D1 à D9 telles que représentées à la **figure 5****.**

Selon le mode de réalisation de l'invention, le procédé de décodage selon l'invention est implémenté dans un dispositif de décodage ou décodeur DO représenté à la **figure 4****.**

Comme illustré en **figure 4****,** le décodeur DO selon ce mode de réalisation de l'invention comprend une mémoire MEM_DO comprenant une mémoire tampon TAMP_DO, une unité de traitement UT_DO équipée par exemple d'un microprocesseur µP et pilotée par un programme d'ordinateur PG_DO qui met en oeuvre le procédé de décodage selon l'invention. A l'initialisation, les instructions de code du programme d'ordinateur PG_DO sont par exemple chargées dans une mémoire RAM (non représentée) avant d'être exécutées par le processeur de l'unité de traitement UT_DO.

Un tel décodeur DO est installé dans un terminal d'affichage d'images (non représenté) tel que par exemple un récepteur de télévision, un téléphone portable, un smartphone (« téléphone intelligent »), une tablette, etc....

Le procédé de décodage représenté sur la **figure 5** s'applique à toute image courante ICⱼ d'une séquence SQ d'images IC₁, ..., ICⱼ,..., IC_{M} (1≤j≤M) à décoder qui ont été capturées par l'un des terminaux de capture d'images précités dans lequel est installé le codeur CO, puis codées par ce dernier.

A cet effet, des informations représentatives de l'image courante ICⱼ à décoder sont identifiées dans un signal de données ϕ reçu au décodeur, tel que délivré à la suite du procédé de codage de la **figure 1****.**

En référence à la **figure 5****,** au cours d'une étape D1, il est procédé à l'identification dans ledit signal ϕ des ensembles de coefficients quantifiés POq₁, POq₂,..., POqᵤ, ...POq_{S} (1≤u≤S) associée respectivement aux portions PO₁, PO₂, ..., POᵤ,..., PO_{S} de l'image courante ICⱼ qui ont été codées précédemment conformément au procédé de codage de la **figure 1****.**

Une telle étape d'identification est mise en oeuvre par un module logiciel d'identification MI_DO d'analyse de signal, tel que représenté à la **figure 4****,** ledit module étant piloté par le microprocesseur µP de l'unité de traitement UT_DO.

Au cours de cette étape, le module d'identification MI_DO identifie, pour une portion d'image courante POᵤ à reconstruire :
- le type de mode de codage (Intra, Inter, Merge, etc...) qui a été utilisé pour cette portion d'image courante,
- l'indice de la portion d'image prédictrice optimale POₒₚₜ qui a été sélectionnée à l'étape C5 précitée,
- le résiduel IMPrᵤ d'information de mouvement si une prédiction de mouvement a été mise en oeuvre conformément à la première alternative de l'étape C4a) précitée.

Pour un ensemble de coefficients quantifiés considéré POqᵤ associé à la portion d'image courante à reconstruire POᵤ, il est procédé, au cours d'une étape D2 représentée à la **figure 5****,** au décodage entropique de cet ensemble de coefficients. Dans le mode préféré de réalisation, un tel décodage entropique est de type arithmétique ou de Huffman. L'étape D2 consiste alors à :
- lire le ou les symboles de l'ensemble prédéterminé de symboles qui sont associés à la portion POᵤ d'image courante à reconstruire,
- associer des informations numériques, telles que des bits, au(x) symbole(s) lu(s).

A l'issue de cette étape D2, un ensemble de coefficients quantifiés décodé PODqᵤ est obtenu.

Une telle étape de décodage entropique est mise en oeuvre par un module logiciel de décodage entropique MDE représenté sur la **figure 4****,** lequel module est piloté par le microprocesseur µP de l'unité de traitement UT_DO. Le module de décodage entropique MDE est par exemple de type CABAC. Il peut également s'agir d'un décodeur de Huffman connu en tant que tel.

Au cours d'une étape D3 représentée à la **figure 5****,** il est procédé à la déquantification de l'ensemble de coefficients quantifiés décodé PODqᵤ selon une opération classique de déquantification, qui est l'opération inverse de l'étape de quantification effectuée à l'étape C7 de la **figure 1****.** Une portion d'image déquantifiée décodée PODtᵤ est alors obtenue.

Une telle étape de déquantification est effectuée par un module logiciel de quantification inverse QT⁻¹_DO, tel que représenté à la **figure 4****,** lequel module est piloté par le microprocesseur µP de l'unité de traitement UT_DO.

Au cours d'une étape D4 représentée à la **figure 5****,** il est procédé à la transformation inverse de la portion d'image déquantifiée décodée PODtᵤ, qui est l'opération inverse de la transformation effectuée à l'étape C6 de la **figure** 1. Une portion d'image PODrᵤ résiduelle décodée courante est alors obtenue.

Une telle opération est effectuée par un module logiciel TF⁻¹_DO de transformée inverse, tel que représenté **figure 4****,** lequel module est piloté par le microprocesseur µP de l'unité de traitement UT_DO.

Au cours d'une étape D5 représentée à la **figure 5****,** il est procédé selon l'invention à une identification dans le signal ϕ :
- soit d'au moins une information relative à la manipulation du terminal de capture d'images précité, en relation avec l'image courante ICⱼ à reconstruire, une telle information faisant partie des informations de capteur précitées D1_{CAP}, D2_{CAP},..., DK_{CAP} et/ou des informations d'interaction utilisateur D1_{INT}, D2_{INT},..., DZ_{INT} précitées,
- soit d'au moins une desdites données DI₁, DI₂,..., DI_{R} d'image courante précitées.

Une telle identification est mise en oeuvre par un module logiciel de lecture ML_DO, tel que représenté à la **figure 4****,** lequel module est piloté par le microprocesseur µP de l'unité de traitement UT_DO.

Si c'est une ou des informations relatives à la manipulation du terminal de capture d'images qui sont identifiées à l'étape D5, au cours d'une étape D6 représentée à la **figure 5****,** un module de traitement TR_DO représenté à la **figure 4** procède à la transformation de ces informations en une donnée ou en plusieurs données relatives à l'image courante ICⱼ qui soi(en)t directement exploitable(s) par le décodeur DO, de telles données d'image courante étant notées DI'₁, DI'₂,..., DI'_{V} (V≥1) sur les **figures 4** et **5****.**

Selon l'invention, la ou les données d'image courante identifiées à l'étape D5 ou obtenues à l'étape D6 sont destinées :
- soit à reconstruire par prédiction de mouvement au moins une information de mouvement IMPᵤ associée à la portion POᵤ d'image courante,
- soit à déterminer au moins une caractéristique d'un mode de décodage MDᵤ associé à la portion POᵤ d'image courante et correspondant au mode de codage MCᵤ identifié à l'étape D1 précitée.

Une telle reconstruction par prédiction de mouvement est mise en oeuvre au cours d'une étape D7a) représentée à la **figure 5****.** L'étape D7a) est mise en oeuvre par un module logiciel de prédiction inverse PRED⁻¹_DO représenté sur la **figure 4****,** lequel module est piloté par le microprocesseur µP de l'unité de traitement UT_DO.

Une telle détermination d'au moins une caractéristique d'un mode de décodage MDᵤ est mise en oeuvre au cours d'une étape D7b) représentée à la **figure 5****.** L'étape D7b) est mise en oeuvre par un module logiciel de calcul CAL_DO représenté sur la **figure 4****,** lequel module est piloté par le microprocesseur µP de l'unité de traitement UT_DO.

Bien entendu, les étapes D7a) et D7b) peuvent aussi bien être mises en oeuvre séparément qu'en combinaison.

Selon une première alternative de l'étape D7a), le module PRED⁻¹_DO reconstruit l'information de mouvement IMPᵤ associée à la portion POᵤ d'image courante en ajoutant au résiduel IMPrᵤ d'information de mouvement identifié dans le signal ϕ à l'étape D1 au moins une desdites données d'image courante DI₁, DI₂,..., DI_{R} telles qu'identifiées à l'étape D5 ou au moins une des données d'image courante DI'₁, DI'₂,..., DI'_{V} telle qu'obtenues à l'étape D6.

Selon une deuxième alternative de l'étape D7a), le module PRED⁻¹_DO affecte par héritage à l'information de mouvement IMPᵤ associée à la portion POᵤ d'image courante à reconstruire au moins une desdites données d'image courante DI₁, DI₂,..., DI_{R} identifiées à l'étape D5 ou au moins une des données d'image courante DI'₁, DI'₂,..., DI'_{V} obtenues à l'étape D6.

Une information de mouvement DIᵤ (1≤u≤R et 1≤u≤V) héritée est alors obtenue à l'issue de l'étape D7a).

Selon une troisième alternative de l'étape D7a), au moins une desdites données d'image courante DI₁, DI₂,..., DI_{R} identifiées à l'étape D5 ou au moins une des données d'image courante DI'₁, DI'₂,..., DI'_{V} obtenues à l'étape D6 est simplement ajoutée à une liste LCP d'informations de mouvement de prédiction candidates stockée dans la mémoire tampon TAMP_DO de la **figure 4****.**

Ainsi, au cours de l'étape D7a), une telle donnée d'image courante pourra éventuellement être sélectionnée dans la liste LCP par le module de prédiction PRED⁻¹_DO, suite à une mise en compétition des informations de mouvement de prédiction de la liste LCP.

La liste LCP est par exemple une liste de prédicteurs de mouvement du mode de décodage AMVP.

Selon une quatrième alternative de l'étape D7a), au moins une desdites données d'image courante DI₁, DI₂,..., DI_{R} identifiées à l'étape D5 ou au moins une des données d'image courante DI'₁, DI'₂,..., DI'_{V} obtenues à l'étape D6 est simplement ajoutée à une liste LCH d'informations de mouvement candidates à l'héritage, telle que stockée dans la mémoire tampon TAMP_DO de la **figure 4****.**

Ainsi, au cours de l'étape D7a), une telle donnée d'image courante pourra éventuellement être sélectionnée dans la liste LCH par le module de prédiction PRED⁻¹_DO.

La liste LCH est par exemple une liste d'informations de mouvement du mode de décodage MERGE.

Selon un exemple pour lequel au moins une donnée d'image courante est utilisée à des fins de reconstruction de l'information de mouvement par prédiction de mouvement, une telle donnée d'image courante est une information de mouvement IMIⱼ associée à l'image courante ICⱼ.

L'information de mouvement IMPᵤ associée à la portion POᵤ d'image courante à reconstruire et l'information de mouvement IMIⱼ associée à l'image courante identifiée à l'étape D5 ou obtenue à l'issue de l'étape D6 sont par exemple respectivement un vecteur de mouvement courant MVᵤ associé à la portion POᵤ d'image courante à reconstruire et un vecteur de mouvement MVⱼ associée à l'image courante ICⱼ.

Différents exemples de caractéristiques de modes de décodage déterminées au cours de l'étape D7b) vont maintenant être décrits.

Selon un premier cas d'usage, une caractéristique du mode de décodage MDᵤ de la portion de l'image courante POᵤ à reconstruire est une précision du mouvement de la portion d'image courante à reconstruire déterminée conformément à une valeur de précision du mouvement de l'image courante qui est associée :
- soit à une valeur d'information de mouvement de l'image courante ICⱼ identifiée directement dans le signal ϕ à l'étape D5,
- soit à une valeur d'information de mouvement de l'image courante ICⱼ déterminée à l'étape D6.

La valeur d'information de mouvement de l'image courante ICⱼ est la valeur d'un vecteur de mouvement MVⱼ associée à l'image courante ICⱼ tel qu'obtenu par exemple au cours de l'étape C3 précitée par association d'une valeur d'accélération du terminal de capture d'images suivant un axe, par exemple horizontal, telle que mesurée par un accéléromètre installé dans le terminal, au moment où l'utilisateur a capturé l'image courante ICⱼ. La valeur du vecteur de mouvement ainsi obtenue est significative de la précision du mouvement de l'image courante ICⱼ et correspond à une résolution de mouvement d'une valeur donnée, telle que par exemple une résolution de vecteur de mouvement au 16^{ème} de pixel, au 8^{ème} de pixel,..., au pixel près.

Selon un deuxième cas d'usage, une caractéristique du mode de décodage MDᵤ de la portion de l'image courante POᵤ à reconstruire est un type de mouvement de la portion de l'image courante à reconstruire déterminé conformément à des paramètres de mouvement de l'image courante ICⱼ qui ont été associés :
- soit à une valeur d'information de mouvement de l'image courante ICⱼ identifiée directement dans le signal ϕ à l'étape D5,
- soit à une valeur d'information de mouvement de l'image courante ICⱼ déterminée à l'étape D6.

Par exemple, une telle donnée d'image courante est la valeur d'un vecteur de mouvement MVⱼ associée à l'image courante ICⱼ tel qu'obtenu par exemple au cours de l'étape C3 précitée par association d'une valeur d'accélération du terminal de capture d'images suivant un axe, par exemple horizontal, telle que mesurée par un accéléromètre installé dans le terminal, au moment où l'utilisateur a capturé l'image courante ICⱼ. La valeur du vecteur de mouvement MVⱼ est définie par deux paramètres de mouvement qui sont les coordonnées de ce vecteur. Le module de calcul CAL_DO en déduit alors que le mouvement de l'image courante ICⱼ est de type linéaire et associe une caractéristique du mode de décodage MDᵤ de la portion d'image courante, le mode Inter par exemple, à ce type linéaire de mouvement.

A titre d'alternative de cet exemple, au cours de l'étape C3 précitée, plusieurs données d'image courante au lieu d'une seule pourraient être obtenues. Ces différentes données d'image courante constituent par exemple une matrice de vecteurs de mouvement associés à différentes valeurs de déplacement telles que mesurées par exemple par l'accéléromètre le long des trois axes X, Y et Z lors de la capture de l'image courante, ou encore des variations d'altitude et/ou de longitude et/ou de latitude entre l'image courante ICj et l'image précédente ICⱼ₋₁, telles que mesurées par le récepteur GPS, lors de la capture de l'image courante. Si trois valeurs de vecteurs de mouvement sont obtenues en association avec respectivement trois accélérations sur les axes X, Y et Z ou avec trois variations d'altitude, longitude et latitude, ces trois valeurs définissent six paramètres de mouvement. Le module de calcul CAL_DO en déduit alors que le mouvement de l'image courante ICⱼ est de type affine et détermine qu'une caractéristique du mode de décodage MDᵤ de la portion d'image courante à reconstruire, le mode Inter par exemple, est un mouvement de type affine.

Selon un troisième cas d'usage, une caractéristique du mode de décodage MDᵤ de la portion d'image courante POᵤ à reconstruire est un ordre de décodage des pixels de la portion de l'image courante conformément à un type d'ordre de décodage des pixels de l'image courante ICⱼ qui a été associé :
- soit à une valeur d'information de mouvement de l'image courante ICⱼ identifiée directement dans le signal ϕ à l'étape D5,
- soit à une valeur d'information de mouvement de l'image courante ICⱼ déterminée à l'étape D6.

Par exemple, une telle donnée d'image courante est la valeur d'un vecteur de mouvement MVⱼ associée à l'image courante ICⱼ tel qu'obtenue par exemple au cours de l'étape C3 précitée par association d'une valeur d'accélération du terminal de capture d'images suivant un axe, par exemple vertical, telle que mesurée par un accéléromètre installé dans le terminal, au moment où l'utilisateur a capturé l'image courante ICⱼ. La direction verticale du vecteur MVⱼ permet au module de calcul CAL_DO de déduire qu'une caractéristique du mode de décodage MDᵤ de la portion d'image courante à reconstruire est un ordre de décodage vertical des pixels de la portion POᵤ d'image courante à reconstruire.

Selon un quatrième cas d'usage, une caractéristique du mode de décodage MDᵤ de la portion d'image courante POᵤ à reconstruire est une direction de prédiction des pixels de la portion de l'image courante déterminée conformément à une valeur d'angle entre l'image courante et une image précédant ladite image courante, ladite valeur d'angle ayant été associée :
- soit à une valeur d'information de mouvement de l'image courante ICⱼ identifiée directement dans le signal ϕ à l'étape D5,
- soit à une valeur d'information de mouvement de l'image courante ICⱼ déterminée à l'étape D6.

Une telle donnée d'image courante est une direction de prédiction du mode de décodage Intra associé à l'image courante ICⱼ telle qu'obtenue par exemple au cours de l'étape C3 précitée par association d'une valeur de variation angulaire entre l'image courante ICⱼ et une image ICⱼ₋₁ précédant l'image courante, telle que mesurée par exemple par un gyroscope installé dans le terminal de capture d'images, au moment où l'utilisateur a capturé l'image courante. Une telle direction de prédiction Intra permet au module de calcul CAL_DO de déduire qu'une caractéristique du mode de décodage MDᵤ de la portion d'image courante à reconstruire est cette direction de prédiction Intra pour les pixels de la portion POᵤ d'image courante à reconstruire.

Selon un cinquième cas d'usage, une caractéristique du mode de décodage MDᵤ de la portion d'image courante POᵤ à reconstruire est un indicateur d'activation ou de non activation d'un module de filtrage des pixels de la portion de l'image courante à reconstruire déterminé en fonction d'une valeur de luminosité de l'image courante qui a été associée :
- soit à au moins une desdites données d'image courante DI₁, DI₂,..., DI_{R} identifiées à l'étape D5 précitée,
- soit à au moins une desdites données d'image courante DI'₁, DI'₂,..., DI'_{R} déterminées à l'étape D6 précitée.

Un module de filtrage, noté FIL_DO, est représenté sur la **figure** 4. Il s'agit par exemple, selon le contexte de décodage utilisé, d'un filtre anti-blocs ou d'atténuation d'effets de blocs ou bien encore un filtre de débruitage.

Selon un premier exemple, une telle donnée d'image courante est une valeur d'accélération mesurée par un accéléromètre installé dans le terminal de capture d'images et indiquée par un drapeau mis à 1 dans le signal ϕ. Le module de calcul CAL_DO déclenche alors l'activation du module de filtrage FIL_DO, ici un filtre anti-blocs. En revanche, si le drapeau correspondant à cette valeur d'accélération est mis à 0, le module de calcul CAL_DO ne déclenche pas l'activation du module de filtrage FIL_DO.

Selon un deuxième exemple, une telle donnée d'image courante est une valeur de luminosité mesurée par un capteur d'illumination installé dans le terminal de capture d'images et indiquée par un drapeau mis à 1 dans le signal ϕ. Le module de calcul CAL_DO déclenche alors l'activation du module de filtrage FIL_DO. En revanche, si le drapeau correspondant à cette valeur de luminosité est mis à 0, le module de calcul CAL_DO ne déclenche pas l'activation du module de filtrage FIL_DO.

Bien entendu, les cas d'usage qui viennent d'être mentionnés ci-dessus peuvent être combinés de façon à déterminer plusieurs caractéristiques de mode de décodage associé à la portion d'image courante POᵤ.

Au cours d'une étape D8 représentée à la **figure 5****,** il est procédé à la reconstruction de la portion d'image courante POᵤ en ajoutant à la portion d'image PODrᵤ résiduelle décodée courante, telle qu'obtenue à l'issue de l'étape D4, une portion d'image prédictrice optimale POₒₚₜ dont l'indice a été identifé dans le signal ϕ à l'étape D1. Une portion d'image courante décodée PODᵤ est alors obtenue.

Une telle étape D8 est mise en oeuvre par le module de prédiction PRED⁻¹_DO représenté sur la **figure 4****.**

Au cours d'une étape D9 représentée à la **figure 5****,** ladite portion d'image courante décodée PODᵤ est écrite dans l'image courante décodée IDⱼ.

Une telle étape est mise en oeuvre par un module logiciel URI de reconstruction d'image tel que représenté sur la **figure 4****,** ledit module étant piloté par le microprocesseur µP du module de traitement UT_DO.

Les étapes de décodage qui viennent d'être décrites ci-dessus sont ensuite mises en oeuvre pour chacune des portions PO₁, PO₂, ..., POᵤ,..., PO_{S} à reconstruire de l'image courante ICⱼ considérée.

Il va de soi que les modes de réalisation qui ont été décrits ci-dessus ont été donnés à titre purement indicatif et nullement limitatif, et que de nombreuses modifications peuvent être facilement apportées par l'homme de l'art sans pour autant sortir du cadre de l'invention.

## Revendications

1. Procédé de codage d'au moins une image courante (ICⱼ), mettant en oeuvre, au niveau d'un terminal de capture d'images, pour au moins une portion à coder de l'image courante, les étapes consistant à:
- déterminer (C2) une information relative à la manipulation du terminal par un utilisateur, en relation avec ladite au moins une image courante capturée,
- obtenir (C3) au moins une donnée relative à l'image courante par transformation de ladite information déterminée, ladite au moins une donnée étant un vecteur de mouvement associé à l'image courante ou une valeur d'angle entre l'image courante et une image précédant l'image courante,
- encoder (C6-C8) une portion d'image résiduelle issue d'une prédiction de ladite au moins une portion de l'image courante par rapport à une portion d'image prédictrice optimale,
- élaborer un signal de données contenant les données encodées de la portion d'image résiduelle,
ledit procédé de codage étant **caractérisé en ce qu'**il met en oeuvre ce qui suit :
- déterminer (C4b)) au moins une caractéristique d'un mode de codage associé à ladite au moins une portion de l'image courante,
ladite au moins une caractéristique étant :
- lorsque ladite au moins une donnée relative à l'image courante est un vecteur de mouvement associé à l'image courante, une précision pixellique du mouvement de la portion d'image courante, qui est déterminée conformément à la valeur dudit vecteur de mouvement associé à l'image courante,
- ou lorsque ladite au moins une donnée relative à l'image courante est une valeur d'angle entre l'image courante et une image précédant l'image courante, une direction de prédiction Intra des pixels de la portion d'image courante, qui est déterminée conformément à ladite valeur d'angle,
- dans le cas où ladite au moins une caractéristique déterminée est sélectionnée suite à une mise en compétition du mode de codage correspondant à ladite au moins une caractéristique déterminée avec des modes de codage prédéterminés, comparer (C5) des données relatives à la portion d'image courante à des données de la portion d'image prédictrice optimale sélectionnée suite à ladite mise en compétition, ladite portion d'image résiduelle étant obtenue à l'issue de ladite comparaison,
- insérer dans le signal de données soit l'information relative à la manipulation du terminal, soit la donnée relative à l'image courante qui a été obtenue par transformation de l'information relative à la manipulation du terminal,
ladite au moins une caractéristique du mode de codage qui a été sélectionnée n'étant pas insérée dans ledit signal.

2. Procédé de codage selon la revendication 1, dans lequel lorsque ladite au moins une donnée relative à l'image courante est un vecteur de mouvement associé à l'image courante, une autre caractéristique du mode de codage de la portion de l'image courante est un ordre de codage des pixels de la portion de l'image courante, qui est déterminé conformément à la direction dudit vecteur de mouvement.

3. Procédé de codage selon la revendication 1 ou la revendication 2, dans lequel lorsque ladite au moins une donnée relative à l'image courante est une valeur d'accélération ou de luminosité, une autre caractéristique du mode de codage de la portion de l'image courante est un indicateur d'activation ou de non-activation d'un module de filtrage des pixels de la portion de l'image courante, qui est déterminé en fonction de ladite valeur d'accélération ou de luminosité.

4. Dispositif (CO) de codage d'au moins une image courante (ICⱼ) apte à être installé dans un terminal de capture d'images, comprenant, pour au moins une portion à coder de l'image courante :
- des moyens (TR_CO) de traitement aptes à :
- déterminer une information relative à la manipulation du terminal par un utilisateur, en relation avec ladite au moins une image capturée,
- obtenir au moins une donnée relative à l'image courante par transformation de ladite donnée déterminée, ladite au moins une donnée étant un vecteur de mouvement associé à l'image courante ou une valeur d'angle entre l'image courante et une image précédant l'image courante,
- des moyens (TF_CO, QT_CO, MCE) aptes à encoder une portion d'image résiduelle issue d'une prédiction de ladite au moins portion de l'image courante par rapport à une portion d'image prédictrice optimale,
- des moyens aptes à élaborer un signal de données contenant les données encodées de la portion d'image résiduelle,
ledit dispositif de codage étant **caractérisé en ce que** lesdits moyens de traitement sont aptes en outre à mettre en oeuvre ce qui suit :
- déterminer au moins une caractéristique d'un mode de codage associé à ladite au moins une portion de l'image courante, conformément à une valeur de ladite caractéristique du mode de codage de l'image courante, ladite valeur ayant été associée à ladite au moins une donnée obtenue, ladite au moins une caractéristique étant :
- lorsque ladite au moins une donnée relative à l'image courante est un vecteur de mouvement associé à l'image courante, une précision pixellique du mouvement de la portion d'image courante, qui est déterminée conformément à la valeur dudit vecteur de mouvement associé à l'image courante,
- ou lorsque ladite au moins une donnée relative à l'image courante est une valeur d'angle entre l'image courante et une image précédant l'image courante, une direction de prédiction Intra des pixels de la portion d'image courante, qui est déterminée conformément à ladite valeur d'angle,
et **en ce que** dans le cas où ladite au moins une caractéristique déterminée est sélectionnée suite à une mise en compétition du mode de codage correspondant à ladite au moins caractéristique déterminée avec des modes de codage prédéterminés, le dispositif de codage comprend :
- des moyens de prédiction (PRED_CO) pour comparer des données relatives à la portion d'image courante à des données de la portion d'image prédictrice optimale sélectionnée suite à ladite mise en compétition, ladite portion d'image résiduelle étant obtenue à l'issue de ladite comparaison, - des moyens d'insertion, dans le signal de données, soit de l'information relative à la manipulation du terminal, soit de la donnée relative à l'image courante qui a été obtenue par transformation de l'information relative à la manipulation du terminal, ladite au moins une caractéristique du mode de codage qui a été sélectionnée n'étant pas insérée dans ledit signal.

5. Programme d'ordinateur comportant des instructions pour mettre en oeuvre le procédé de codage selon l'une quelconque des revendications 1 à 3, lorsqu'il est exécuté sur un ordinateur.

6. Support d'enregistrement lisible par un ordinateur sur lequel est enregistré un programme d'ordinateur comprenant des instructions de code de programme pour l'exécution des étapes du procédé de codage selon l'une quelconque des revendications 1 à 3, lorsque ledit programme est exécuté par un ordinateur.

7. Procédé de décodage d'un signal de données représentatif d'au moins une image courante (ICⱼ), mettant en oeuvre, au niveau d'un terminal d'affichage d'images, pour au moins une portion à reconstruire de l'image courante, ce qui suit :
- identifier (D1) dans ledit signal :
- des données encodées relatives à une portion d'image résiduelle associée à ladite au moins une portion d'image courante,
- une portion d'image prédictrice optimale associée à ladite portion d'image résiduelle,
- décoder (D2-D4) ladite portion d'image résiduelle,
ledit procédé de décodage étant **caractérisé en ce qu'**il comprend ce qui suit :
- identifier (D5), dans le signal, soit une information relative à la manipulation du terminal par un utilisateur, en relation avec ladite au moins une image courante capturée, soit une donnée relative à l'image courante obtenue préalablement par transformation de ladite information relative à la manipulation du terminal,
- si c'est une information relative à la manipulation du terminal qui est identifiée, déterminer (D6) au moins une donnée relative à l'image courante par transformation de ladite information identifiée,
ladite au moins une donnée d'image identifiée ou déterminée étant un vecteur de mouvement associé à l'image courante ou une valeur d'angle entre l'image courante et une image précédant l'image courante,
- déterminer (D7b)) au moins une caractéristique d'un mode de décodage associé à ladite au moins une portion de l'image courante, conformément à une valeur de ladite caractéristique du mode de décodage de l'image courante, ladite valeur ayant été associée à ladite au moins une donnée identifiée ou déterminée, ladite au moins une caractéristique déterminée n'étant pas contenue dans ledit signal,
ladite au moins une caractéristique étant :
- lorsque ladite au moins une donnée relative à l'image courante est un vecteur de mouvement associé à l'image courante, une précision pixellique du mouvement de la portion d'image courante, qui est déterminée conformément à la valeur dudit vecteur de mouvement associé à l'image courante,
- ou lorsque ladite au moins une donnée relative à l'image courante est une valeur d'angle entre l'image courante et une image précédant l'image courante, une direction de prédiction Intra des pixels de la portion d'image courante, qui est déterminée conformément à ladite valeur d'angle
- reconstruire la portion de l'image courante conformément à ladite au moins une caractéristique déterminée, à partir de ladite portion d'image résiduelle décodée et de ladite portion d'image prédictrice optimale.

8. Procédé de décodage selon la revendication 7, dans lequel lorsque ladite au moins une donnée relative à l'image courante est un vecteur de mouvement associé à l'image courante, une autre caractéristique du mode de décodage de la portion de l'image courante est un ordre de décodage des pixels de la portion de l'image courante, qui est déterminé conformément à la direction dudit vecteur de mouvement.

9. Procédé de décodage selon la revendication 7, dans lequel lorsque ladite au moins une donnée relative à l'image courante est une valeur d'accélération ou de luminosité, une autre caractéristique du mode de décodage de la portion de l'image courante est un indicateur d'activation ou de non-activation d'un module de filtrage des pixels de la portion de l'image courante, qui est déterminé en fonction de ladite valeur d'accélération ou de luminosité.

10. Dispositif (DO) de décodage d'un signal de données représentatif d'au moins une image courante (ICⱼ), ledit dispositif étant apte à être installé dans un terminal d'affichage d'images et comprenant, pour au moins une portion à reconstruire dans l'image courante,
- des moyens (MI_DO) de lecture pour identifier dans ledit signal :
- des données encodées relatives à une portion d'image résiduelle associée à ladite au moins une portion d'image courante,
- une portion d'image prédictrice optimale associée à ladite portion d'image résiduelle,
- des moyens (MDE, QT⁻¹_DO, TF⁻¹_DO) de décodage de ladite portion résiduelle,
ledit dispositif de décodage étant **caractérisé en ce qu'**il comprend en outre :
- des moyens (ML_DO) de lecture pour identifier, dans le signal, soit une information relative à la manipulation du terminal par un utilisateur, en relation avec ladite au moins une image courante capturée, soit une donnée relative à l'image courante obtenue préalablement par transformation de ladite information relative à la manipulation du terminal,
- des moyens (TR_DO) de traitement aptes à :
- déterminer, si c'est une information relative à la manipulation du terminal qui est identifiée, au moins une donnée relative à l'image courante par transformation de ladite information identifiée,
- déterminer au moins une caractéristique d'un mode de décodage associé à ladite au moins une portion de l'image courante, conformément à une valeur de ladite caractéristique du mode de décodage de l'image courante, ladite valeur ayant été associée à ladite au moins une donnée identifiée ou déterminée, ladite au moins une caractéristique déterminée n'étant pas contenue dans ledit signal,
ladite au moins une caractéristique étant :
- lorsque ladite au moins une donnée relative à l'image courante est un vecteur de mouvement associé à l'image courante, une précision pixellique du mouvement de la portion d'image courante, qui est déterminée conformément à la valeur dudit vecteur de mouvement associé à l'image courante,
- ou lorsque ladite au moins une donnée relative à l'image courante est une valeur d'angle entre l'image courante et une image précédant l'image courante, une direction de prédiction Intra des pixels de la portion d'image courante, qui est déterminée conformément à ladite valeur d'angle,
- des moyens (PRED-'_DO) de reconstruction de la portion de l'image courante conformément à ladite au moins une caractéristique déterminée, à partir de ladite portion d'image résiduelle décodée et de ladite portion d'image prédictrice optimale.

11. Programme d'ordinateur comportant des instructions pour mettre en oeuvre le procédé de décodage selon l'une quelconque des revendications 7 à 9, lorsqu'il est exécuté sur un ordinateur.

12. Support d'enregistrement lisible par un ordinateur sur lequel est enregistré un programme d'ordinateur comprenant des instructions de code de programme pour l'exécution des étapes du procédé de codage selon l'une quelconque des revendications 7 à 9, lorsque ledit programme est exécuté par un ordinateur.

## Patentansprüche

1. Verfahren zur Codierung mindestens eines aktuellen Bildes (ICⱼ), das an einem Bilderfassungsendgerät für mindestens einen zu codierenden Abschnitt des aktuellen Bildes die Schritte umsetzt, die aus Folgendem bestehen:
- Bestimmen (C2) einer Information in Bezug auf die Bedienung des Endgeräts durch einen Benutzer in Zusammenhang mit dem mindestens einen erfassten aktuellen Bild,
- Erhalten (C3) mindestens eines Datenelements in Bezug auf das aktuelle Bild durch Umwandeln der bestimmten Information, wobei das mindestens eine Datenelement ein Bewegungsvektor, der mit dem aktuellen Bild assoziiert ist, oder ein Wert eines Winkels zwischen dem aktuellen Bild und einem dem aktuellen Bild vorausgehenden Bild ist,
- Codieren (C6-C8) eines verbleibenden Bildabschnitts, der sich aus einer Prädiktion des mindestens einen Abschnitts des aktuellen Bildes im Verhältnis zu einem optimalen prädiktiven Bildabschnitt ergibt,
- Erstellen eines Datensignals, das die codierten Daten des verbleibenden Bildabschnitts enthält,
wobei das Codierungsverfahren **dadurch gekennzeichnet ist, dass** es Folgendes umsetzt:
- Bestimmen (C4b)) mindestens einer Eigenschaft eines Codierungsmodus, der mit dem mindestens einen Abschnitt des aktuellen Bildes assoziiert ist, wobei die mindestens eine Eigenschaft Folgendes ist:
- wenn das mindestens eine Datenelement in Bezug auf das aktuelle Bild ein Bewegungsvektor ist, der mit dem aktuellen Bild assoziiert ist, eine Pixelgenauigkeit der Bewegung des Abschnitts des aktuellen Bildes, die entsprechend dem Wert des mit dem aktuellen Bild assoziierten Bewegungsvektors bestimmt wird,
- oder, wenn das mindestens eine Datenelement in Bezug auf das aktuelle Bild ein Wert eines Winkels zwischen dem aktuellen Bild und einem dem aktuellen Bild vorausgehenden Bild ist, eine Intra-Prädiktionsrichtung der Pixel des Abschnitts des aktuellen Bildes, die entsprechend dem Wert des Winkels bestimmt wird,
- in dem Fall, in dem die mindestens eine bestimmte Eigenschaft im Anschluss an eine Bewertung des Codierungsmodus, der der mindestens einen bestimmten Eigenschaft entspricht, im Vergleich zu vorbestimmten Codierungsmodi ausgewählt wird, Vergleichen (C5) von Daten in Bezug auf den Abschnitt des aktuellen Bildes mit Daten des im Anschluss an die Bewertung ausgewählten optimalen prädiktiven Bildabschnitts, wobei der verbleibende Bildabschnitt nach Abschluss des Vergleichs erhalten wird,
- Einfügen, in das Datensignal, entweder der Information in Bezug auf die Bedienung des Endgeräts oder des Datenelements in Bezug auf das aktuelle Bild, das durch Umwandeln der Information in Bezug auf die Bedienung des Endgeräts erhalten wurde,
wobei die mindestens eine Eigenschaft des Codierungsmodus, die ausgewählt wurde, nicht in das Signal eingefügt wird.

2. Codierungsverfahren nach Anspruch 1, wobei, wenn das mindestens eine Datenelement in Bezug auf das aktuelle Bild ein Bewegungsvektor ist, der mit dem aktuellen Bild assoziiert ist, eine andere Eigenschaft des Codierungsmodus des Abschnitts des aktuellen Bildes eine Codierungsreihenfolge der Pixel des Abschnitts des aktuellen Bildes ist, die entsprechend der Richtung des Bewegungsvektors bestimmt wird.

3. Codierungsverfahren nach Anspruch 1 oder Anspruch 2, wobei, wenn das mindestens eine Datenelement in Bezug auf das aktuelle Bild ein Beschleunigungs- oder Helligkeitswert ist, eine andere Eigenschaft des Codierungsmodus des Abschnitts des aktuellen Bildes ein Aktivierungs- oder Nichtaktivierungsindikator eines Filtermoduls für die Pixel des Abschnitts des aktuellen Bildes ist, der in Abhängigkeit von dem Beschleunigungs- oder Helligkeitswert bestimmt wird.

4. Vorrichtung (CO) zur Codierung mindestens eines aktuellen Bildes (ICⱼ), die dazu fähig ist, in einem Bilderfassungsendgerät installiert zu sein, und die für mindestens einen zu codierenden Abschnitt des aktuellen Bildes Folgendes beinhaltet:
- Verarbeitungsmittel (TR_CO), die zu Folgendem fähig sind:
- Bestimmen einer Information in Bezug auf die Bedienung des Endgeräts durch einen Benutzer in Zusammenhang mit dem mindestens einen erfassten Bild,
- Erhalten mindestens eines Datenelements in Bezug auf das aktuelle Bild durch Umwandeln des bestimmten Datenelements, wobei das mindestens eine Datenelement ein Bewegungsvektor, der mit dem aktuellen Bild assoziiert ist, oder ein Wert eines Winkels zwischen dem aktuellen Bild und einem dem aktuellen Bild vorausgehenden Bild ist,
- Mittel (TF_CO, QT_CO, MCE), die dazu fähig sind, einen verbleibenden Bildabschnitt, der sich aus einer Prädiktion des mindestens einen Abschnitts des aktuellen Bildes im Verhältnis zu einem optimalen prädiktiven Bildabschnitt ergibt, zu codieren,
- Mittel, die dazu fähig sind, ein Datensignal zu erstellen, das die codierten Daten des verbleibenden Bildabschnitts enthält,
wobei die Codierungsvorrichtung **dadurch gekennzeichnet ist, dass** die Verarbeitungsmittel ferner dazu fähig sind, Folgendes umzusetzen:
- Bestimmen mindestens einer Eigenschaft eines Codierungsmodus, der mit dem mindestens einen Abschnitt des aktuellen Bildes assoziiert ist, entsprechend einem Wert der Eigenschaft des Codierungsmodus des aktuellen Bildes, wobei der Wert mit dem mindestens einen erhaltenen Datenelement assoziiert wurde, wobei die mindestens eine Eigenschaft Folgendes ist:
- wenn das mindestens eine Datenelement in Bezug auf das aktuelle Bild ein Bewegungsvektor ist, der mit dem aktuellen Bild assoziiert ist, eine Pixelgenauigkeit der Bewegung des Abschnitts des aktuellen Bildes, die entsprechend dem Wert des mit dem aktuellen Bild assoziierten Bewegungsvektors bestimmt wird,
- oder, wenn das mindestens eine Datenelement in Bezug auf das aktuelle Bild ein Wert eines Winkels zwischen dem aktuellen Bild und einem dem aktuellen Bild vorausgehenden Bild ist, eine Intra-Prädiktionsrichtung der Pixel des Abschnitts des aktuellen Bildes, die entsprechend dem Wert des Winkels bestimmt wird,
und dass in dem Fall, in dem die mindestens eine bestimmte Eigenschaft im Anschluss an eine Bewertung des Codierungsmodus, der der mindestens einen bestimmten Eigenschaft entspricht, im Vergleich zu vorbestimmten Codierungsmodi ausgewählt wird, die Codierungsvorrichtung Folgendes beinhaltet:
- Prädiktionsmittel (PRED_CO) zum Vergleichen von Daten in Bezug auf den Abschnitt des aktuellen Bildes mit Daten des im Anschluss an die Bewertung ausgewählten optimalen prädiktiven Bildabschnitts, wobei der verbleibende Bildabschnitt nach Abschluss des Vergleichs erhalten wird,
- Mittel zum Einfügen, in das Datensignal, entweder der Information in Bezug auf die Bedienung des Endgeräts oder des Datenelements in Bezug auf das aktuelle Bild, das durch Umwandeln der Information in Bezug auf die Bedienung des Endgeräts erhalten wurde, wobei die mindestens eine Eigenschaft des Codierungsmodus, die ausgewählt wurde, nicht in das Signal eingefügt wird.

5. Computerprogramm, das Anweisungen zur Umsetzung des Codierungsverfahrens nach einem beliebigen der Ansprüche 1 bis 3 umfasst, wenn es auf einem Computer ausgeführt wird.

6. Computerlesbares Aufzeichnungsmedium, auf dem ein Computerprogramm aufgezeichnet ist, das Programmcodeanweisungen zur Ausführung der Schritte des Codierungsverfahrens nach einem beliebigen der Ansprüche 1 bis 3 beinhaltet, wenn das Programm durch einen Computer ausgeführt wird.

7. Verfahren zur Decodierung eines Datensignals, das für mindestens ein aktuelles Bild (ICⱼ) repräsentativ ist, das an einem Bildanzeigeendgerät für mindestens einen zu rekonstruierenden Abschnitt des aktuellen Bildes Folgendes umsetzt:
- Identifizieren (D1), in dem Signal, von:
- codierten Daten in Bezug auf einen verbleibenden Bildabschnitt, der mit dem mindestens einen Abschnitt des aktuellen Bildes assoziiert ist,
- einem optimalen prädiktiven Bildabschnitt, der mit dem verbleibenden Bildabschnitt assoziiert ist,
- Decodieren (D2-D4) des verbleibenden Bildabschnitts, wobei das Decodierungsverfahren **dadurch gekennzeichnet ist, dass** es Folgendes beinhaltet:
- Identifizieren (D5), in dem Signal, entweder einer Information in Bezug auf die Bedienung des Endgeräts durch einen Benutzer in Zusammenhang mit dem mindestens einen erfassten aktuellen Bild, oder eines Datenelements in Bezug auf das aktuelle Bild, das zuvor durch Umwandeln der Information in Bezug auf die Bedienung des Endgeräts erhalten wurde,
- wenn es sich um eine Information in Bezug auf die Bedienung des Endgeräts handelt, die identifiziert wird, Bestimmen (D6) mindestens eines Datenelements in Bezug auf das aktuelle Bild durch Umwandeln der identifizierten Information,
wobei das mindestens eine identifizierte oder bestimmte Bilddatenelement ein Bewegungsvektor, der mit dem aktuellen Bild assoziiert ist, oder ein Wert eines Winkels zwischen dem aktuellen Bild und einem dem aktuellen Bild vorausgehenden Bild ist,
- Bestimmen (D7b)) mindestens einer Eigenschaft eines Decodierungsmodus, der mit dem mindestens einen Abschnitt des aktuellen Bildes assoziiert ist, entsprechend einem Wert der Eigenschaft des Decodierungsmodus des aktuellen Bildes, wobei der Wert mit dem mindestens einen identifizierten oder bestimmten Datenelement assoziiert wurde, wobei die mindestens eine bestimmte Eigenschaft nicht in dem Signal enthalten ist, wobei die mindestens eine Eigenschaft Folgendes ist:
- wenn das mindestens eine Datenelement in Bezug auf das aktuelle Bild ein Bewegungsvektor ist, der mit dem aktuellen Bild assoziiert ist, eine Pixelgenauigkeit der Bewegung des Abschnitts des aktuellen Bildes, die entsprechend dem Wert des mit dem aktuellen Bild assoziierten Bewegungsvektors bestimmt wird,
- oder, wenn das mindestens eine Datenelement in Bezug auf das aktuelle Bild ein Wert eines Winkels zwischen dem aktuellen Bild und einem dem aktuellen Bild vorausgehenden Bild ist, eine Intra-Prädiktionsrichtung der Pixel des Abschnitts des aktuellen Bildes, die entsprechend dem Wert des Winkels bestimmt wird,
- Rekonstruieren des Abschnitts des aktuellen Bildes entsprechend der mindestens einen bestimmten Eigenschaft anhand des decodierten verbleibenden Bildabschnitts und des optimalen prädiktiven Bildabschnitts.

8. Decodierungsverfahren nach Anspruch 7, wobei, wenn das mindestens eine Datenelement in Bezug auf das aktuelle Bild ein Bewegungsvektor ist, der mit dem aktuellen Bild assoziiert ist, eine andere Eigenschaft des Decodierungsmodus des Abschnitts des aktuellen Bildes eine Codierungsreihenfolge der Pixel des Abschnitts des aktuellen Bildes ist, die entsprechend der Richtung des Bewegungsvektors bestimmt wird.

9. Decodierungsverfahren nach Anspruch 7, wobei, wenn das mindestens eine Datenelement in Bezug auf das aktuelle Bild ein Beschleunigungs- oder Helligkeitswert ist, eine andere Eigenschaft des Decodierungsmodus des Abschnitts des aktuellen Bildes ein Aktivierungs- oder Nichtaktivierungsindikator eines Filtermoduls für die Pixel des Abschnitts des aktuellen Bildes ist, der in Abhängigkeit von dem Beschleunigungs- oder Helligkeitswert bestimmt wird.

10. Vorrichtung (DO) zur Decodierung eines Datensignals, das für mindestens ein aktuelles Bild (ICⱼ) repräsentativ ist, wobei die Vorrichtung dazu fähig ist, in einem Bildanzeigeendgerät installiert zu sein, und für mindestens einen zu rekonstruierenden Abschnitt in dem aktuellen Bild Folgendes beinhaltet:
- Lesemittel (MI_DO) zum Identifizieren, in dem Signal, von Folgendem:
- codierten Daten in Bezug auf einen verbleibenden Bildabschnitt, der mit dem mindestens einen Abschnitt des aktuellen Bildes assoziiert ist,
- einem optimalen prädiktiven Bildabschnitt, der mit dem verbleibenden Bildabschnitt assoziiert ist,
- Mittel (MDE, QT⁻¹_DO, TF⁻¹_DO) zum Decodieren des verbleibenden Abschnitts,
wobei die Decodierungsvorrichtung **dadurch gekennzeichnet ist, dass** sie ferner Folgendes beinhaltet:
- Lesemittel (ML_DO), um in dem Signal entweder eine Information in Bezug auf die Bedienung des Endgeräts durch einen Benutzer in Zusammenhang mit dem mindestens einen erfassten aktuellen Bild oder ein Datenelement in Bezug auf das aktuelle Bild, das zuvor durch Umwandeln der Information in Bezug auf die Bedienung des Endgeräts erhalten wurde, zu identifizieren,
- Verarbeitungsmittel (TR_DO), die zu Folgendem fähig sind:
- Bestimmen, wenn es sich um eine Information in Bezug auf die Bedienung des Endgeräts handelt, die identifiziert wird, mindestens eines Datenelements in Bezug auf das aktuelle Bild durch Umwandeln der identifizierten Information,
- Bestimmen mindestens einer Eigenschaft eines Decodierungsmodus, der mit dem mindestens einen Abschnitt des aktuellen Bildes assoziiert ist, entsprechend einem Wert der Eigenschaft des Decodierungsmodus des aktuellen Bildes, wobei der Wert mit dem mindestens einen identifizierten oder bestimmten Datenelement assoziiert wurde, wobei die mindestens eine bestimmte Eigenschaft nicht in dem Signal enthalten ist, wobei die mindestens eine Eigenschaft Folgendes ist:
- wenn das mindestens eine Datenelement in Bezug auf das aktuelle Bild ein Bewegungsvektor ist, der mit dem aktuellen Bild assoziiert ist, eine Pixelgenauigkeit der Bewegung des Abschnitts des aktuellen Bildes, die entsprechend dem Wert des mit dem aktuellen Bild assoziierten Bewegungsvektors bestimmt wird,
- oder, wenn das mindestens eine Datenelement in Bezug auf das aktuelle Bild ein Wert eines Winkels zwischen dem aktuellen Bild und einem dem aktuellen Bild vorausgehenden Bild ist, eine Intra-Prädiktionsrichtung der Pixel des Abschnitts des aktuellen Bildes, die entsprechend dem Wert des Winkels bestimmt wird,
- Mittel (PRED⁻¹_DO) zum Rekonstruieren des Abschnitts des aktuellen Bildes entsprechend der mindestens einen bestimmten Eigenschaft anhand des decodierten verbleibenden Bildabschnitts und des optimalen prädiktiven Bildabschnitts.

11. Computerprogramm, das Anweisungen zur Umsetzung des Decodierungsverfahrens nach einem beliebigen der Ansprüche 7 bis 9 umfasst, wenn es auf einem Computer ausgeführt wird.

12. Computerlesbares Aufzeichnungsmedium, auf dem ein Computerprogramm aufgezeichnet ist, das Programmcodeanweisungen zur Ausführung der Schritte des Decodierungsverfahrens nach einem beliebigen der Ansprüche 7 bis 9 beinhaltet, wenn das Programm durch einen Computer ausgeführt wird.

## Claims

1. Method for coding at least one current image (ICⱼ), implementing, on an image capture terminal, for at least one portion to be coded of the current image, the steps consisting in:
- determining (C2) an information item relating to the manipulation of the terminal by a user, in relation to said at least one captured current image,
- obtaining (C3) at least one datum relating to the current image by transformation of said determined information item, said at least one datum being a motion vector associated with the current image or a value of an angle between the current image and an image preceding the current image,
- encoding (C6-C8) a residual image portion resulting from a prediction of said at least one portion of the current image with respect to an optimum predictive image portion,
- creating a data signal containing the encoded data of the residual image portion,
said coding method being **characterized in that** it implements the following:
- determining (C4b)) at least one characteristic of a coding mode associated with said at least one portion of the current image, said at least one characteristic being:
- when said at least one datum relating to the current image is a motion vector associated with the current image, a pixel-level precision of the motion of the current image portion, which is determined in accordance with the value of said motion vector associated with the current image,
- or when said at least one datum relating to the current image is a value of an angle between the current image and an image preceding the current image, an Intra prediction direction of the pixels of the current image portion, which is determined in accordance with said angle value,
- if said at least one determined characteristic is selected following competition between the coding mode corresponding to said at least one determined characteristic and predetermined coding modes, comparing (C5) data relating to the current image portion with data of the optimum predictive image portion selected following said competition, said residual image portion being obtained at the end of said comparison,
- inserting, into the data signal, either the information item relating to the manipulation of the terminal or the datum relating to the current image that was obtained by transformation of the information item relating to the manipulation of the terminal,
said at least one characteristic of the coding mode that has been selected not being inserted into said signal.

2. Coding method according to Claim 1, wherein, when said at least one datum relating to the current image is a motion vector associated with the current image, another characteristic of the coding mode for the portion of the current image is a coding order of the pixels of the portion of the current image, which is determined in accordance with the direction of said motion vector.

3. Coding method according to Claim 1 or Claim 2, wherein, when said at least one datum relating to the current image is an acceleration value or brightness value, another characteristic of the coding mode for the portion of the current image is an indicator of activation or non-activation of a module for filtering the pixels of the portion of the current image, which is determined on the basis of said acceleration value or brightness value.

4. Device (CO) for coding at least one current image (ICⱼ) which is able to be installed in an image capture terminal, comprising, for at least one portion to be coded of the current image:
- processing means (TR_CO) capable of:
- determining an information item relating to the manipulation of the terminal by a user, in relation to said at least one captured image,
- obtaining at least one datum relating to the current image by transformation of said determined datum, said at least one datum being a motion vector associated with the current image or a value of an angle between the current image and an image preceding the current image,
- means (TF_CO, QT_CO, MCE) capable of encoding a residual image portion resulting from a prediction of said at least one portion of the current image with respect to an optimum predictive image portion,
- means capable of creating a data signal containing the encoded data of the residual image portion,
said coding device being **characterized in that** said processing means are furthermore capable of implementing the following:
- determining at least one characteristic of a coding mode associated with said at least one portion of the current image, in accordance with a value of said characteristic of the coding mode for the current image, said value having been associated with said at least one obtained datum, said at least one characteristic being:
- when said at least one datum relating to the current image is a motion vector associated with the current image, a pixel-level precision of the motion of the current image portion, which is determined in accordance with the value of said motion vector associated with the current image,
- or when said at least one datum relating to the current image is a value of an angle between the current image and an image preceding the current image, an Intra prediction direction of the pixels of the current image portion, which is determined in accordance with said angle value,
and **in that**, if said at least one determined characteristic is selected following competition between the coding mode corresponding to said at least one determined characteristic and predetermined coding modes, the coding device comprises:
- prediction means (PRED_CO) for comparing data relating to the current image portion with data of the optimum predictive image portion selected following said competition, said residual image portion being obtained at the end of said comparison,
- insertion means for inserting, into the data signal, either the information item relating to the manipulation of the terminal or the datum relating to the current image that was obtained by transformation of the information item relating to the manipulation of the terminal, said at least one characteristic of the coding mode that has been selected not being inserted into said signal.

5. Computer program comprising instructions for implementing the coding method according to any one of Claims 1 to 3 when it is executed on a computer.

6. Recording medium able to be read by a computer and on which there is recorded a computer program comprising program code instructions for executing the steps of the coding method according to any one of Claims 1 to 3 when said program is executed by a computer.

7. Method for decoding a data signal representative of at least one current image (ICⱼ), implementing the following, on an image display terminal, for at least one portion to be reconstructed of the current image:
- identifying (D1), in said signal:
- encoded data relating to a residual image portion associated with said at least one current image portion,
- an optimum predictive image portion associated with said residual image portion,
- decoding (D2-D4) said residual image portion, said decoding method being **characterized in that** it comprises the following:
- identifying (D5), in the signal, either an information item relating to the manipulation of the terminal by a user, in relation to said at least one captured current image, or a datum relating to the current image obtained previously by transformation of said information item relating to the manipulation of the terminal,
- if it is an information item relating to the manipulation of the terminal which is identified, determining (D6) at least one datum relating to the current image by transformation of said identified information item,
said at least one identified or determined image datum being a motion vector associated with the current image or a value of an angle between the current image and an image preceding the current image,
- determining (D7b)) at least one characteristic of a decoding mode associated with said at least one portion of the current image, in accordance with a value of said characteristic of the decoding mode for the current image, said value having been associated with said at least one identified or determined datum, said at least one determined characteristic not being contained in said signal, said at least one characteristic being:
- when said at least one datum relating to the current image is a motion vector associated with the current image, a pixel-level precision of the motion of the current image portion, which is determined in accordance with the value of said motion vector associated with the current image,
- or when said at least one datum relating to the current image is a value of an angle between the current image and an image preceding the current image, an Intra prediction direction of the pixels of the current image portion, which is determined in accordance with said angle value,
- reconstructing the portion of the current image in accordance with said at least one determined characteristic, based on said decoded residual image portion and on said optimum predictive image portion.

8. Decoding method according to Claim 7, wherein, when said at least one datum relating to the current image is a motion vector associated with the current image, another characteristic of the decoding mode for the portion of the current image is a decoding order of the pixels of the portion of the current image, which is determined in accordance with the direction of said motion vector.

9. Decoding method according to Claim 7, wherein, when said at least one datum relating to the current image is an acceleration value or brightness value, another characteristic of the decoding mode for the portion of the current image is an indicator of activation or non-activation of a module for filtering the pixels of the portion of the current image, which is determined on the basis of said acceleration value or brightness value.

10. Device (DO) for decoding a data signal representative of at least one current image (ICⱼ), said device being able to be installed in an image display terminal and comprising, for at least one portion to be reconstructed of the current image,
- reading means (MI_DO) for identifying, in said signal:
- encoded data relating to a residual image portion associated with said at least one current image portion,
- an optimum predictive image portion associated with said residual image portion,
- decoding means (MDE, QT⁻¹_DO, TF⁻¹_DO) for decoding said residual portion,
said decoding device being **characterized in that** it furthermore comprises:
- reading means (ML_DO) for identifying, in the signal, either an information item relating to the manipulation of the terminal by a user, in relation to said at least one captured current image, or a datum relating to the current image obtained previously by transformation of said information item relating to the manipulation of the terminal,
- processing means (TR_DO) capable of:
- determining, if it is an information item relating to the manipulation of the terminal which is identified, at least one datum relating to the current image by transformation of said identified information item,
- determining at least one characteristic of a decoding mode associated with said at least one portion of the current image, in accordance with a value of said characteristic of the decoding mode for the current image, said value having been associated with said at least one identified or determined datum, said at least one determined characteristic not being contained in said signal, said at least one characteristic being:
- when said at least one datum relating to the current image is a motion vector associated with the current image, a pixel-level precision of the motion of the current image portion, which is determined in accordance with the value of said motion vector associated with the current image,
- or when said at least one datum relating to the current image is a value of an angle between the current image and an image preceding the current image, an Intra prediction direction of the pixels of the current image portion, which is determined in accordance with said angle value,
- reconstruction means (PRED⁻¹_DO) for reconstructing the portion of the current image in accordance with said at least one determined characteristic, based on said decoded residual image portion and on said optimum predictive image portion.

11. Computer program comprising instructions for implementing the decoding method according to any one of Claims 7 to 9 when it is executed on a computer.

12. Recording medium able to be read by a computer and on which there is recorded a computer program comprising program code instructions for executing the steps of the decoding method according to any one of Claims 7 to 9 when said program is executed by a computer.
